# EUROPEAN PATENT APPLICATION

(11) **EP 4 671 862 A1**
(43) Date of publication of application: **31.12.2025**
(21) Application number: 25184627.5
(22) Date of filing: 23.06.2025
(51) Int. Cl.: G03B 21/16, G03B 21/20, G02B 6/00

(54) **LIGHT SOURCE DEVICE AND PROJECTOR**

(30) Priority: 25.06.2024 JP 2024101935
(71) Applicant: Seiko Epson Corporation, Tokyo 160-8801 (JP)
(72) Inventor: MASUDA, Tomoharu, Suwa-shi, 392-8502 (JP)
(74) Representative: Lewis Silkin LLP

(57) **Abstract**

A light source device according to the present disclosure includes a light source unit including a light emitting element configured to emit light, a light guide member onto which the light emitted from the light emitting element is incident and which is configured to emit light, a support member configured to support the light guide member, a pressing unit configured to press the light guide member against the support member, a measurement unit configured to measure a characteristic value correlated with a temperature of the light guide member, a controller configured to acquire the characteristic value measured by the measurement unit, and a temperature adjustment unit configured to adjust the temperature of the light guide member, wherein the controller controls the temperature adjustment unit based on the characteristic value.

## Description

The present application is based on, and claims priority from JP Application Serial Number 2024-101935, filed June 25, 2024, the disclosure of which is hereby incorporated by reference herein in its entirety.

### BACKGROUND

### 1. Technical Field

The present disclosure relates to a light source device and a projector.

### 2. Related Art

As a light source device used in a projector, there has been proposed a light source device that emits fluorescence emitted from a phosphor when the phosphor is irradiated with excitation light emitted from a light emitting element. JP-A-2023-108325 discloses a light source device including a light source element that emits excitation light and a wavelength conversion member containing a phosphor that converts the excitation light into fluorescence.

JP-A-2023-108325 is an example of the related art.

In the technique described in JP-A-2023-108325, when the phosphor contained in the wavelength conversion member absorbs the excitation light, the temperature of the wavelength conversion member rises. When the temperature of the wavelength conversion member is too high, there is a possibility that temperature quenching of the fluorescence increases in the wavelength conversion member. There is therefore a possibility that the wavelength conversion efficiency, which is the efficiency at which the wavelength conversion member converts the excitation light into the fluorescence, deteriorates. Further, when the temperature of the wavelength conversion member is too high, there is a possibility that the color gamut of the fluorescence emitted by the wavelength conversion member decreases. Therefore, there is a possibility that the quality of the image projected by the projector deteriorates.

### SUMMARY

In order to solve the problems described above, a light source device according to an aspect of the present disclosure includes a light source unit including a light emitting element configured to emit light, a light guide member onto which the light emitted from the light emitting element is incident and which is configured to emit light, a support member configured to support the light guide member, a pressing unit configured to press the light guide member against the support member, a measurement unit configured to measure a characteristic value correlated with a temperature of the light guide member, a controller configured to acquire the characteristic value measured by the measurement unit, and a temperature adjustment unit configured to adjust the temperature of the light guide member, wherein the controller controls the temperature adjustment unit based on the characteristic value.

A projector according to an aspect of the present disclosure includes the light source apparatus according to the aspect of the present disclosure; a light modulator configured to modulate light output from the light source apparatus; and a projection optical apparatus configured to project the light modulated by the light modulator.

### BRIEF DESCRIPTION OF THE DRAWINGS

FIG. 1 is a schematic configuration diagram of a projector according to an embodiment.
FIG. 2 is a schematic configuration diagram of a first illumination device.
FIG. 3 is a plan view of a light source device viewed from an incident direction.
FIG. 4 is a cross-sectional view of the light source device taken along the line IV-IV in FIG. 3.
FIG. 5 is a cross-sectional view of the light source device taken along the line V-V in FIG. 3.
FIG. 6 shows a wavelength spectrum of second light.
FIG. 7 is a flowchart showing temperature control.
FIG. 8 is a cross-sectional view of a light source device according to a first modified example of the embodiment.
FIG. 9 is a cross-sectional view of a light source device according to a second modified example of the embodiment.
FIG. 10 is a schematic configuration diagram of a first illumination device according to a second embodiment.
FIG. 11 is a flowchart showing temperature control in the second embodiment.
FIG. 12 is a schematic configuration diagram of a first Illumination device according to a third embodiment.
FIG. 13 is a flowchart showing temperature control in the third embodiment.
FIG. 14 is a diagram showing transition in an air flow rate in the third embodiment.
FIG. 15 is a diagram showing the temperature transition of the light guide member in the third embodiment.
FIG. 16 is a schematic configuration diagram of a first Illumination device according to a fourth embodiment.
FIG. 17 is a flowchart showing temperature control in the fourth embodiment.

### DESCRIPTION OF EMBODIMENTS

Embodiments of the present disclosure will hereinafter be described.

A projector according to the present embodiment is an example of a projector using liquid crystal panels as light modulation devices.

In the following drawings, elements are drawn at different dimensional scales in some cases in order to make the elements eye-friendly.

The description with reference to the drawings will hereinafter be made using an X-Y-Z orthogonal coordinate system as needed. The X axis is an axis extending in a direction in which a light guide member of the embodiment described below extends. In the following description, a direction in which the X axis extends (an X-axis direction) may be referred to as a "longitudinal direction". The Z axis is an axis extending along the vertical direction of the projector. In the following description, a direction in which the Z axis extends is referred to as a Z-axis direction. The Y axis is an axis perpendicular to both the X axis and the Z axis. In the following description, the direction in which the Y axis extends (a Y-axis direction) may be referred to as an "incident direction". The incident direction is a direction into which first light is incident on the light guide member. Further, the incident direction is a direction in which a light source unit emits the first light, that is, light. In the following description, a side to which an arrow of the X axis faces is referred to as a +X side, a side opposite thereto is referred to as a -X side, a side to which an arrow of the Y axis faces is referred to as a +Y side, a side opposite thereto is referred to as a -Y side, a side to which an arrow of the Z axis faces is referred to as a +Z side, and a side opposite thereto is referred to as a -Z side.

### First Embodiment

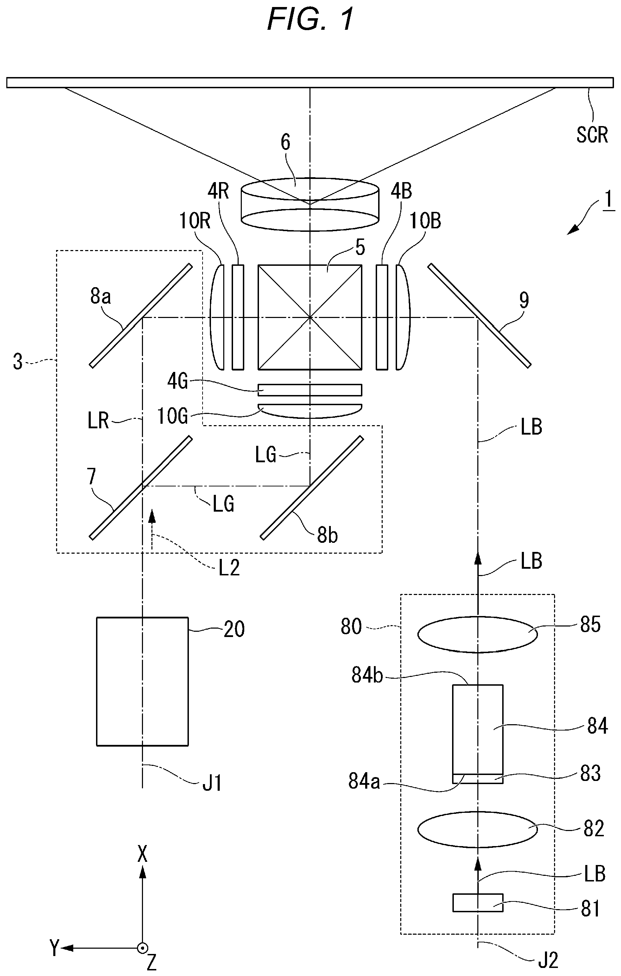

FIG. 1 is a schematic configuration diagram of a projector 1 according to the present embodiment. The projector 1 is a projection-type image display apparatus that displays a color image on a screen SCR, which is a projection target surface, as shown in FIG. 1. The projector 1 includes three light modulation devices 4R, 4G, and 4B corresponding to three types of colored light, that is, red light LR, green light LG, and blue light LB. The projector 1 includes a first illumination device 20, a second illumination device 80, a color separation optical system 3, the light modulation devices 4R, 4G, and 4B, a light combining element 5, and a projection optical device 6.

The first illumination device 20 emits second light L2, which is yellow light, toward the color separation optical system 3. The second light L2 is light emitted from the light source device 21 provided to the first illumination device 20. The second illumination device 80 emits the blue light LB toward the light modulation device 4B. Detailed configurations of the first illumination device 20 and the second illumination device 80 will be described later.

A first optical axis J1 appropriately shown in the drawings is the central axis of the second light L2 emitted from the first illumination device 20. A second optical axis J2 shown in FIG. 1 is the central axis of the blue light LB emitted from the second illumination device 80. The first optical axis J1 and the second optical axis J2 extend in a direction parallel to the longitudinal direction (the X-axis direction).

The color separation optical system 3 separates the second light L2, which is the yellow light, emitted from the first illumination device 20 into the red light LR and the green light LG. The color separation optical system 3 includes a dichroic mirror 7, a first reflecting mirror 8a, and a second reflecting mirror 8b.

The dichroic mirror 7 separates the second light L2 into the red light LR and the green light LG. The dichroic mirror 7 transmits the red light LR and reflects the green light LG. The second reflecting mirror 8b is disposed in the light path of the green light LG. The second reflecting mirror 8b reflects the green light LG, which is reflected by the dichroic mirror 7, toward the light modulation device 4G. The first reflecting mirror 8a is disposed in the light path of the red light LR. The first reflecting mirror 8a reflects the red light LR, which passed through the dichroic mirror 7, toward the light modulation device 4R.

The blue light LB emitted from the second illumination device 80 is reflected by a reflecting mirror 9 toward the light modulation device 4B. The second illumination device 80 includes a second light source unit 81, a light collecting lens 82, a diffuser plate 83, a rod lens 84, and a relay lens 85. The second light source unit 81 is configured with at least one semiconductor laser. The second light source unit 81 emits the blue light LB, which is a laser beam, toward the light collecting lens 82. Note that the second light source unit 81 is not necessarily configured with a semiconductor laser, and may be configured with an LED that emits blue light.

The light collecting lens 82 is configured with a convex lens. The light collecting lens 82 causes the blue light LB emitted from the second light source unit 81 to enter the diffuser plate 83 in a converged state. The diffuser plate 83 diffuses the blue light LB emitted from the light collecting lens 82 with a predetermined diffusion degree to thereby generate blue light LB having a uniform light distribution. The diffuser plate 83 is configured with, for example, a ground-glass plate made of optical glass.

The blue light LB diffused by the diffuser plate 83 enters the rod lens 84. The rod lens 84 has a prismatic shape extending along a direction of the second optical axis J2. The rod lens 84 has an end plane of incidence of light 84a disposed at one end and a light exit end surface 84b disposed at the other end. The diffuser plate 83 is fixed to the end plane of incidence of light 84a of the rod lens 84 via an optical adhesive (not shown). It is desirable that the refractive index of the diffuser plate 83 matches as much as possible with the refractive index of the rod lens 84.

The blue light LB propagates through the interior of the rod lens 84 while being totally reflected therein to thereby be emitted from the light exit end surface 84b in a state in which the uniformity of the illuminance distribution is enhanced. The blue light LB emitted from the rod lens 84 enters the relay lens 85. The relay lens 85 causes the blue light LB, the illuminance distribution of which is enhanced in uniformity by the rod lens 84, to enter the reflecting mirror 9. The light exit end surface 84b of the rod lens 84 has a rectangular shape substantially similar to the shape of an image formation region of the light modulation device 4B. Thus, the blue light LB emitted from the rod lens 84 is efficiently incident on the image formation region of the light modulation device 4B.

The light modulation device 4R modulates the red light LR in accordance with image information to form image light corresponding to the red light LR. The light modulation device 4G modulates the green light LG in accordance with the image information to form image light corresponding to the green light LG. The light modulation device 4B modulates the blue light LB in accordance with the image information to form image light corresponding to the blue light LB. The light modulation devices 4R, 4G, and 4B can each be, for example, a transmissive liquid crystal panel. Polarization plates not shown are disposed at the light incident side and the light exit side of each of the light modulation devices 4R, 4G, and 4B. The polarization plates each transmit only linearly polarized light polarized in a specific direction. The red light LR and the green light LG are light beams into which the second light L2 is separated by the dichroic mirror 7, as described above. Therefore, the light modulation devices 4R, 4G modulate the second light L2, that is, the light emitted from the light source device 21.

A field lens 10R is disposed at an incident side of the light modulation device 4R. The field lens 10R collimates a principal ray of the red light LR to be incident on the light modulation device 4R. A field lens 10G is disposed at an incident side of the light modulation device 4G. The field lens 10G collimates a principal ray of the green light LG to be incident on the light modulation device 4G. A field lens 10B is disposed at an incident side of the light modulation device 4B. The field lens 10B collimates a principal ray of the blue light LB to be incident on the light modulation device 4B.

The light combining element 5 combines the image light beams respectively modulated by the light modulation devices 4R, 4G, and 4B with each other and then emits the image light beams thus combined toward the projection optical device 6. As the light combining element 5, a cross dichroic prism, for example, can be used.

The projection optical device 6 is formed of a plurality of projection lenses (not shown). The projection optical device 6 projects the image light beams combined in the light combining element 5 toward the screen SCR in an enlarged manner. The projection optical device 6 projects the light modulated by the light modulation devices 4R, 4G, and 4B toward the screen SCR. Thus, a color image is displayed on the screen SCR.

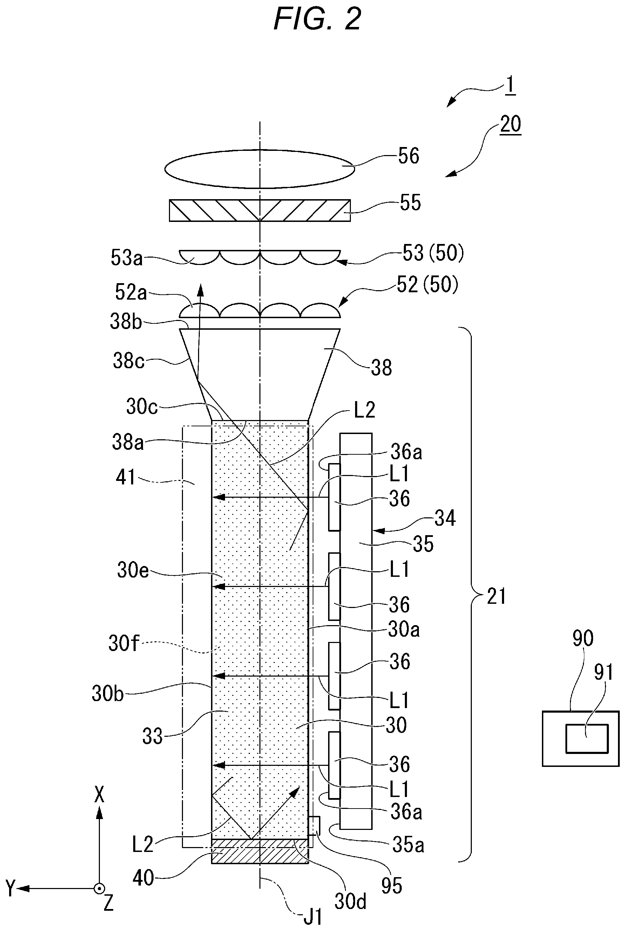

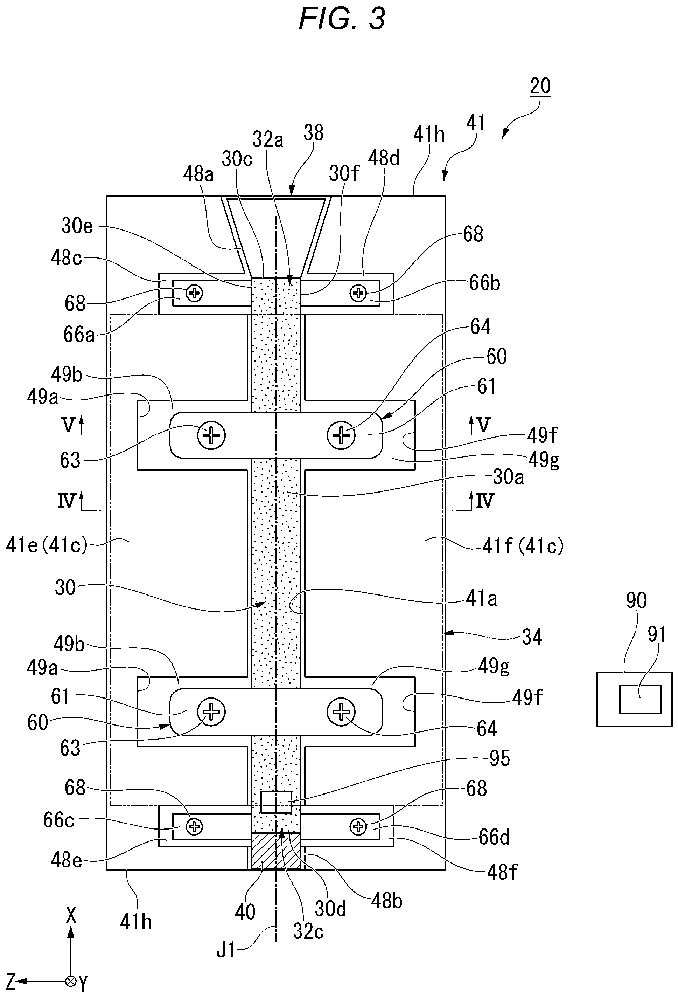

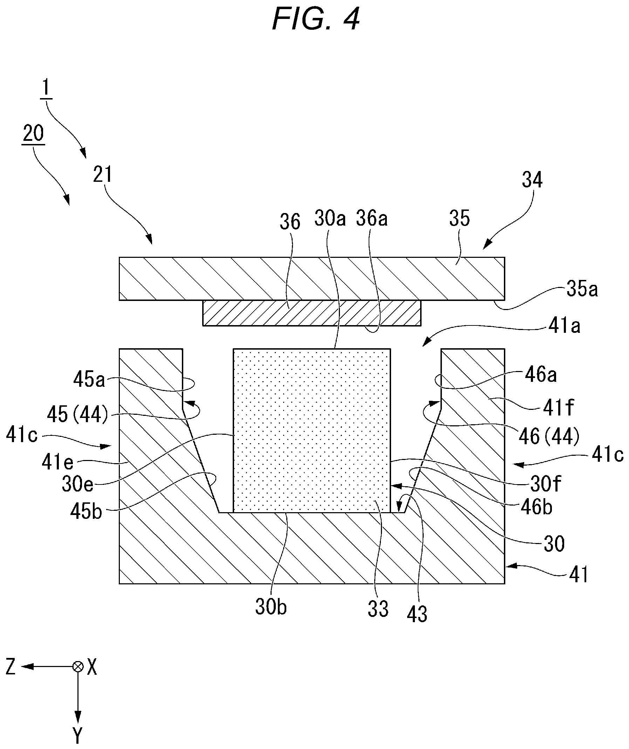

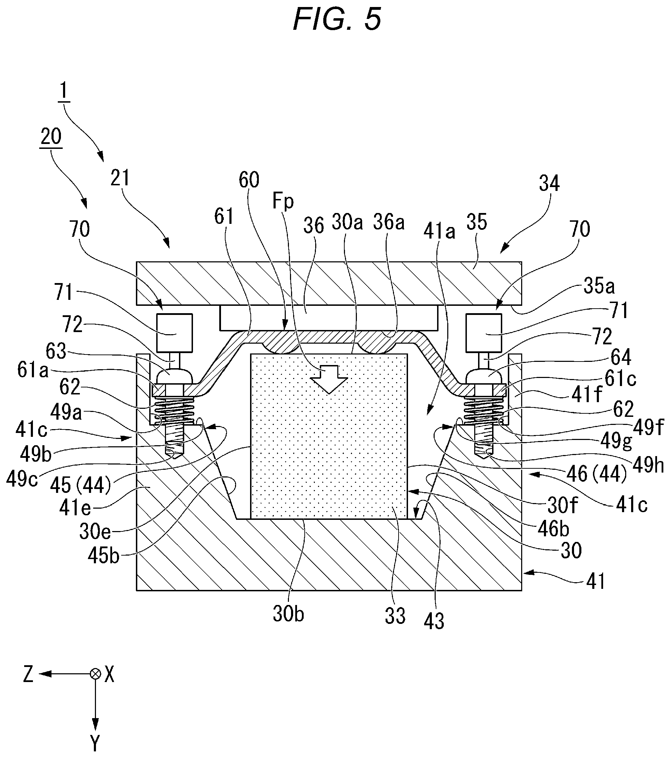

FIG. 2 is a schematic configuration diagram of the first illumination device 20. FIG. 3 is a plan view of the light source device 21 viewed from the incident direction (the Y-axis direction). FIG. 4 is a cross-sectional view of the light source device 21 taken along the line IV-IV in FIG. 3. FIG. 5 is a cross-sectional view of the light source device 21 taken along the line V-V in FIG. 3. The first illumination device 20 includes the light source device 21, an integrator optical system 50, a polarization conversion element 55, and a superimposing optical system 56, as shown in FIG. 2.

The light source device 21 converts first light L1 into the second light L2, which is the yellow light, and emits the second light L2 toward the integrator optical system 50. The light source device 21 includes a wavelength conversion member 30, a light source unit 34, an angle conversion member 38, a mirror 40, a support member 41, a controller 90, and a measurement unit 95. As illustrated in FIG. 5, the light source device 21 includes a pressing unit 60 and a temperature adjustment unit 70. The wavelength conversion member 30 in the present embodiment corresponds to a "light guide member" in the appended claims. Therefore, the light source device 21 includes a light guide member.

As shown in FIG. 2, the wavelength conversion member 30 has a quadrangular prismatic shape extending along the longitudinal direction (the X-axis direction) and has six surfaces. The dimension in the longitudinal direction of the wavelength conversion member 30 is larger than each of the dimension in the incident direction (the Y-axis direction) and the dimension in the Z-axis direction. In the wavelength conversion member 30, the dimension in the incident direction and the dimension in the Z-axis direction are substantially the same as each other. Therefore, the cross-sectional shape of the wavelength conversion member 30 cut by a plane perpendicular to the longitudinal direction is a substantially square shape. The cross-sectional shape of the wavelength conversion member 30 cut by a plane perpendicular to the longitudinal direction may be another shape such as a rectangular shape.

The wavelength conversion member 30 has a first surface 30a and a second surface 30b that are orthogonal to the incident direction (the Y-axis direction) and are located at opposite sides of the incident direction. The second surface 30b is located at the +Y side of the first surface 30a. The first surface 30a and the second surface 30b face opposite directions to each other.

The wavelength conversion member 30 has a third surface 30c and a fourth surface 30d that are orthogonal to the longitudinal direction (the X-axis direction) and are located at respective sides opposite to each other in the longitudinal direction. The fourth surface 30d is located at the -X side of the third surface 30c. The third surface 30c and the fourth surface 30d face opposite directions to each other.

As shown in FIG. 4, the wavelength conversion member 30 has a fifth surface 30e and a sixth surface 30f that are orthogonal to the Z-axis direction and are located at respective sides opposite to each other in the Z-axis direction. The sixth surface 30f is located at the -Z side of the fifth surface 30e. The fifth surface 30e and the sixth surface 30f face opposite directions to each other.

Note that the wavelength conversion member 30 is not required to have the quadrangular prismatic shape, and may have a shape such as a triangular prismatic shape or a cylindrical shape. When the shape of the wavelength conversion member 30 is a triangular prismatic shape, three surfaces crossing each of the third surface 30c as the exit end surface and the fourth surface 30d as the reflection end surface are collectively referred to as side surfaces. When the shape of the wavelength conversion member 30 is a cylindrical shape, a single continuous curved surface that crosses each of the third surface 30c and the fourth surface 30d is defined as the side surface.

As shown in FIG. 2, the wavelength conversion member 30 includes a phosphor 33 and converts first light L1 which has a first wavelength band and is emitted from the light source unit 34 into the second light L2 having a second wavelength band different from the first wavelength band. The wavelength conversion member 30 emits the second light L2 toward the angle conversion member 38. The first light L1 is emitted from the light source unit 34 in the incident direction (the Y-axis direction), and enters the wavelength conversion member 30 via the first surface 30a. The second light L2 is guided through the inside of the wavelength conversion member 30 and is then emitted via the third surface 30c toward the angle conversion member 38.

In the present embodiment, the phosphor 33 is a ceramic phosphor made of a polycrystalline phosphor that converts the first light L1 into the second light L2. The second wavelength band, to which the second light L2 belongs, is a yellow wavelength band of, for example, 490 nm to 900 nm. That is, the second light L2 is yellow fluorescence containing a red light component and a green light component. Note that the phosphor 33 may be a single crystal phosphor. Further, the wavelength conversion member 30 may be formed of fluorescent glass. The wavelength conversion member 30 may be configured with a material obtained by dispersing a large number of phosphor particles in a binder made of glass or resin.

In the present embodiment, the wavelength conversion member 30 contains, for example, an yttrium aluminum garnet (YAG)-based phosphor. Consider YAG:Ce, which contains cerium (Ce) as an activator, by way of example, and the wavelength conversion member 30 is made, for example, of a material produced by mixing raw powder materials containing Y₂O₃, Al₂O₃, CeO₃, and other elements with one another and causing the mixture to go through a solid-phase reaction, Y-Al-O amorphous particles produced by using a coprecipitation method, a sol-gel method, or any other wet method, or YAG particles produced by using a spray-drying method, a flame-based thermal decomposition method, a thermal plasma method, or any other gas-phase method.

When the first light L1 enters the wavelength conversion member 30, the phosphor 33 absorbs the first light L1 and emits the second light L2 having the second wavelength band. Thus, the wavelength conversion member 30 converts the first light L1 into the second light L2. Note that, when the phosphor 33 absorbs the first light L1, the phosphor 33 generates heat. This increases the temperature of the wavelength conversion member 30.

The light source unit 34 irradiates the wavelength conversion member 30 with the first light L1. The light source unit 34 is disposed so as to face the first surface 30a of the wavelength conversion member 30 in the incident direction (the Y-axis direction). As illustrated in FIG. 4, the light source unit 34 includes a substrate 35 and a light emitting element 36. The light source unit 34 may include other optical members such as a light guide plate, a diffusion plate, and a lens.

The substrate 35 has a plate shape spreading in directions orthogonal to the incident direction (the Y-axis direction). When viewed from the incident direction, the substrate 35 has a substantially rectangular shape long sides of which extend in the longitudinal direction (the X-axis direction). The substrate 35 has a surface 35a. The surface 35a is a surface facing the +Y side out of outer surfaces of the substrate 35. The surface 35a is opposed to the wavelength conversion member 30 in the incident direction.

The light emitting element 36 is mounted on the surface 35a of the substrate 35. The light emitting elements 36 are each configured with, for example, a light emitting diode (LED). The light emitting element 36 has a light emitting surface 36a. The light emitting surface 36a faces the first surface 30a of the wavelength conversion member 30 in the incident direction (the Y-axis direction). The light emitting element 36 emits the first light L1 having the first wavelength band, that is the light, from the light emitting surface 36a toward the first surface 30a of the wavelength conversion member 30. Thus, the first light L1 emitted from the light emitting element 36 enters the wavelength conversion member 30. As shown in FIG. 2, the wavelength conversion member 30 converts the first light L1 into the second light L2 and emits the second light L2. In the present embodiment, the first wavelength band is, for example, a wavelength band of 400 nm to 480 nm corresponding to a color range of blue to purple. The peak wavelength of the first light L1 is, for example, 445 nm.

The light source unit 34 includes a plurality of light emitting elements 36. In the present embodiment, the light source unit 34 includes four light emitting elements 36. The light emitting elements 36 are arranged at intervals along the longitudinal direction (the X-axis direction). The light emitting elements 36 each face the first surface 30a in the incident direction (the Y-axis direction). The number of the light emitting elements 36 provided to the light source unit 34 is not particularly limited, and may be three or less or five or more.

The support member 41 extends in the longitudinal direction (the X-axis direction) and supports the wavelength conversion member 30, that is, the light guide member. The heat generated in the wavelength conversion member 30 is transferred to the support member 41, and the heat is released to the outside of the light source device 21. It is therefore desirable that the support member 41 is made of a material having a predetermined strength and high thermal conductivity. As a material constituting the support member 41, aluminum, stainless steel, or the like can be used, and it is particularly desirable to use an aluminum alloy such as 6061 series. In the present embodiment, the support member 41 is made of aluminum. As shown in FIG. 4, the support member 41 has a U-shape when viewed from the longitudinal direction. As illustrated in FIG. 3, the support member 41 includes a support groove 41a, a sidewall 41c, a first housing 48a, a second housing 48b, a third housing 48c, a fourth housing 48d, a fifth housing 48e, a sixth housing 48f, a first recess 49a, and a second recess 49f.

As illustrated in FIG. 4, the support groove 41a is a groove recessed toward the +Y side from a surface of the support member 41 facing the -Y side. As shown in FIG. 3, the support groove 41a extends in the longitudinal direction (the X-axis direction). The wavelength conversion member 30 is housed in the support groove 41a. As shown in FIG. 4, the support groove 41a has a support surface 43 and a sidewall surface 44.

The support surface 43 is a surface facing the -Y side out of the inner surfaces of the support groove 41a. The support surface 43 supports the second surface 30b of the wavelength conversion member 30 in the incident direction (the Y-axis direction). Thus, the support surface 43 supports the wavelength conversion member 30. The heat generated in the wavelength conversion member 30 is transferred to the support member 41 via the support surface 43, and is released from the outer surface of the support member 41 to the outside of the light source device 21. This can prevent the temperature of the wavelength conversion member 30 from becoming too high.

The sidewall 41c is a portion of the support member 41 facing the wavelength conversion member 30 in the Z-axis direction. In the present embodiment, the support member 41 has two sidewalls 41c. The two sidewalls 41c include a first sidewall 41e and a second sidewall 41f.

The first sidewall 41e is a portion of the support member 41 located on the +Z side of the support groove 41a. The first sidewall 41e faces the fifth surface 30e of the wavelength conversion member 30 with a gap in the Z direction. The second sidewall 41f is a portion of the support member 41 located at the -Z side of the support groove 41a. The second sidewall 41f faces the sixth surface 30f of the wavelength conversion member 30 with a gap in the Z direction. The second sidewall 41f faces the first sidewall 41e in the Z-axis direction across the wavelength conversion member 30.

The sidewall surface 44 is a surface facing the wavelength conversion member 30 in the Z-axis direction out of the inner surfaces of the support groove 41a. In the present embodiment, the support groove 41a has two sidewall surfaces 44. The two sidewall surfaces 44 include a first sidewall surface 45 and a second sidewall surface 46.

The first sidewall surface 45 is a surface facing the -Z side out of the outer surfaces of the first sidewall 41e. The first sidewall surface 45 faces the fifth surface 30e of the wavelength conversion member 30. The first sidewall surface 45 has a first portion 45a located at a far side from the support surface 43 and a second portion 45b located at a near side to the support surface 43. The first portion 45a extends in a direction perpendicular to the support surface 43. The second portion 45b is a tilted surface that approaches the wavelength conversion member 30 as approaching the support surface 43.

The second sidewall surface 46 is a surface facing the +Z side out of the outer surfaces of the second sidewall 41f. The second sidewall surface 46 faces the sixth surface 30f of the wavelength conversion member 30. The second sidewall surface 46 has a third portion 46a located at a far side from the support surface 43 and a fourth portion 46b located on a near side to the support surface 43. The third portion 46a extends in a direction perpendicular to the support surface 43. The fourth portion 46b is a tilted surface that approaches the wavelength conversion member 30 as approaching the support surface 43.

The first housing 48a illustrated in FIG. 3 is a recess communicating with a +X side end portion of the support groove 41a. The first housing 48a penetrates to an outer edge 41h at the +X side of the support member 41. The first housing 48a houses a first protrusion 32a of the wavelength conversion member 30 protruding from the support groove 41a toward the +X side. Further, the first housing 48a holds the angle conversion member 38 fixed to the third surface 30c of the wavelength conversion member 30.

The second housing 48b is a recess communicating with a -X side end portion of the support groove 41a. The second housing 48b penetrates to the outer edge 41h at the -X side of the support member 41. The second housing 48b houses a second protrusion 32c of the wavelength conversion member 30 protruding from the support groove 41a toward the -X side. Further, the second housing 48b houses the mirror 40 disposed on the fourth surface 30d of the wavelength conversion member 30.

The third housing 48c is a recess extending from the first housing 48a toward the +Z side. The third housing 48c houses a position regulating portion 66a that holds a +Z side portion of the first protrusion 32a.

The fourth housing 48d is a recess extending from the first housing 48a toward the -Z side. The fourth housing 48d houses a position regulating portion 66b that holds the -Z side portion of the first protrusion 32a.

The fifth housing 48e is a recess extending in the +Z direction from the second housing 48b. The fifth housing 48e houses a position regulating portion 66c that holds the +Z side portion of the second protrusion 32c.

The sixth housing 48f is a recess extending in the -Z direction from the second housing 48b. The sixth housing 48f houses a position regulating portion 66d that holds the -Z side portion of the second protrusion 32c.

The position regulating portions 66a, 66b, 66c, and 66d hold the first protrusion 32a or the second protrusion 32c protruding in the longitudinal direction (the X-axis direction) from the support groove 41a of the support member 41, and regulate the position of the wavelength conversion member 30 with respect to the support groove 41a. The position regulating portions 66a, 66b, 66c, and 66d are each fixed to the support member 41 with a screw 68. Note that the positions of the position regulating portions 66a, 66b in the Z-axis direction can be adjusted by an adjustment mechanism (not illustrated). Similarly, the positions of the position regulating portions 66c, 66d in the Z-axis direction can be adjusted by an adjustment mechanism (not illustrated).

As illustrated in FIG. 5, the first recess 49a is a hole recessed toward the +Y side from a surface of the first sidewall 41e facing the -Y side. The first recess 49a is opened toward the - Z side. The inside of the first recess 49a communicates with the inside of the support groove 41a. The dimension of the first recess 49a in the incident direction (the Y-axis direction) is smaller than the dimension of the support groove 41a in the incident direction. As shown in FIG. 3, the first recess 49a has a substantially rectangular shape long sides of which extend in the Z-axis direction when viewed from the incident direction. The support member 41 has a plurality of first recesses 49a. In the present embodiment, the support member 41 has two first recesses 49a. The first recesses 49a are disposed at a distance from each other in the longitudinal direction (the X-axis direction). Although not illustrated, each of the first recesses 49a is disposed between a pair of light emitting elements 36 disposed adjacent to each other in the longitudinal direction. As shown in FIG. 5, the first recess 49a has a first inner surface 49b.

The first inner surface 49b is a surface facing the -Y side out of the inner surfaces of the first recess 49a. In the incident direction (the Y-axis direction), the first inner surface 49b is located at the -Y side of the support surface 43. A first hole 49c is provided to the first inner surface 49b. The first hole 49c is an internal screw hole recessed from the first inner surface 49b toward the +Y side.

The second recess 49f is a hole recessed toward the +Y side from a surface of the second sidewall 41f facing the -Y side. The second recess 49f is opened toward the +Z side. The inside of the second recess 49f communicates with the inside of the support groove 41a. The dimension of the second recess 49f in the incident direction (the Y-axis direction) is smaller than the dimension of the support groove 41a in the incident direction. As shown in FIG. 3, the second recess 49f has a substantially rectangular shape long sides of which extend in the Z-axis direction when viewed from the incident direction. The support member 41 has a plurality of second recesses 49f. In the present embodiment, the support member 41 has two second recesses 49f. The second recesses 49f are disposed at a distance from each other in the longitudinal direction (the X-axis direction). The second recesses 49f face respective first recesses 49a different from each other in the Z-axis direction. Although not shown, each of the second recesses 49f is disposed between a pair of light emitting elements arranged adjacent to each other in the longitudinal direction. As shown in FIG. 5, the second recess 49f has a second inner surface 49g.

The second inner surface 49g is a surface facing the -Y side out of the inner surfaces of the second recess 49f. In the incident direction (the Y-axis direction), the second inner surface 49g is located at the -Y side of the support surface 43. A second hole 49h is provided to the second inner surface 49g. The second hole 49h is an internal screw hole recessed from the second inner surface 49g toward the +Y side.

As shown in FIG. 2, the mirror 40 is disposed on the fourth surface 30d of the wavelength conversion member 30. The mirror 40 reflects, toward the third surface 30c, the second light L2 which was guided inside the wavelength conversion member 30, and reached the fourth surface 30d. The mirror 40 is formed of a metal film or a dielectric multilayer film formed at the fourth surface 30d of the wavelength conversion member 30.

The first light L1 emitted from the light emitting elements 36 toward the first surface 30a enters the wavelength conversion member 30 via the first surface 30a. When the first light L1 enters the wavelength conversion member 30, the phosphor 33 is excited by the first light L1 and emits the second light L2. The second light L2 travels radially around the phosphor 33. The second light L2 traveling toward each of the first surface 30a, the second surface 30b, the fifth surface 30e, and the sixth surface 30f of the wavelength conversion member 30 travels toward the third surface 30c or the fourth surface 30d while repeating total reflection on each of the surfaces 30a, 30b, 30e, and 30f. The second light L2 traveling toward the fourth surface 30d is reflected by the mirror 40 and then travels toward the third surface 30c. In this way, the entire second light L2 emitted in the phosphor 33 travels toward the third surface 30c, then is transmitted through the third surface 30c, and then enters the angle conversion member 38. Note that as described above, when the phosphor 33 absorbs the first light L1, the phosphor 33 generates heat. This increases the temperature of the wavelength conversion member 30.

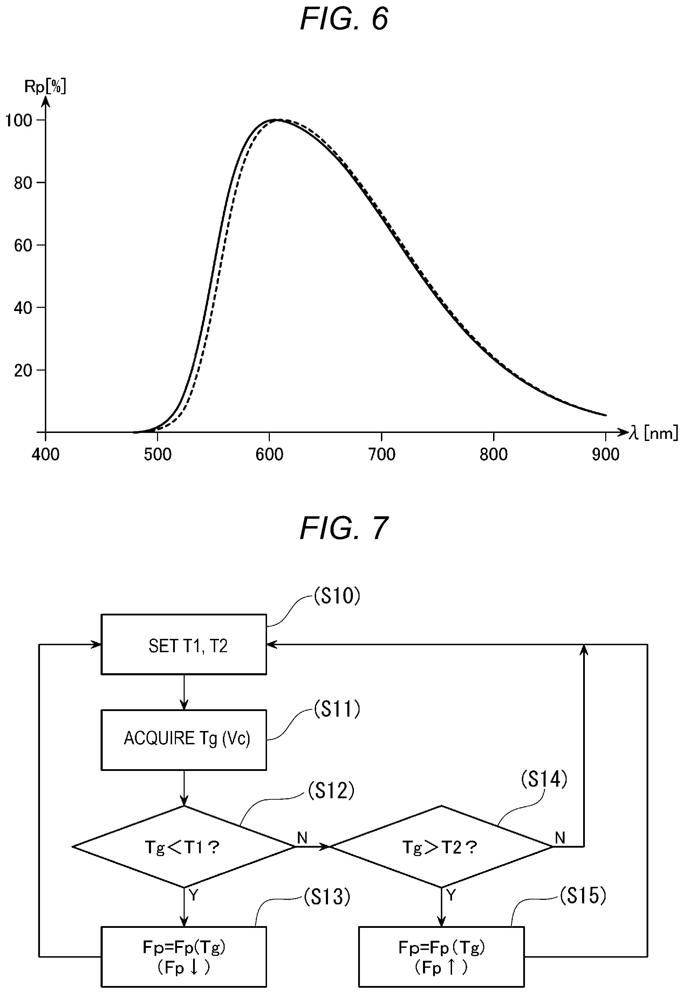

FIG. 6 is a diagram illustrating a wavelength spectrum of the second light L2 in the present embodiment.

Then, a relationship between the temperature Tg of the wavelength conversion member 30 and the wavelength spectrum of the second light L2 emitted from the wavelength conversion member 30 will be described. In FIG. 6, the horizontal axis represents a measured wavelength, and the vertical axis represents a light intensity ratio when setting the maximum light intensity in the emission spectrum emitted from the wavelength conversion member 30 as the denominator and the light intensity of each wavelength as the numerator. The solid line indicates the wavelength spectrum of the second light L2 when the temperature Tg of the wavelength conversion member 30 is lower than a second temperature T2 described later, and the broken line indicates the wavelength spectrum of the second light L2 when the temperature Tg of the wavelength conversion member 30 is higher than the second temperature T2.

As described above, the second wavelength band provided of the second light L2 is, for example, a yellow wavelength band of 490 nm to 900 nm. The second light L2 has the maximum intensity at a wavelength near 600 nm. When the temperature Tg of the wavelength conversion member 30 is higher than the second temperature T2, the light intensity in the wavelength range of 490 nm to 600 nm decreases, and the wavelength spectrum shifts toward the long wavelength region. Accordingly, since the light intensity in the green wavelength band of the second light L2 decreases, the color gamut of the second light L2 decreases. Therefore, when the temperature Tg of the wavelength conversion member 30 becomes too high, the color gamut of the color image projected on the screen SCR by the projector 1 decreases. This deteriorates the quality of the image projected on the screen SCR by the projector 1.

The angle conversion member 38 shown in FIG. 2 is disposed at an exit side of the third surface 30c of the wavelength conversion member 30. The second light L2 emitted via the third surface 30c enters the angle conversion member 38. The angle conversion member 38 is configured with, for example, a light transmissive member such as a tapered rod. The angle conversion member 38 has a plane of incidence 38a onto which the second light L2 emitted from the wavelength conversion member 30 is incident, an exit surface 38b through which the second light L2 is emitted, and a reflecting side surface 38c which reflects the second light L2 toward the exit surface 38b. The plane of incidence 38a faces the third surface 30c in the longitudinal direction (the X-axis direction).

The angle conversion member 38 has a truncated quadrangular pyramidal shape, and the cross-sectional area thereof perpendicular to the first optical axis J1 increases along the traveling direction of the second light L2. Therefore, the area of the exit surface 38b is greater than the area of the plane of incidence 38a. In the present embodiment, the optical axis of the angle conversion member 38 coincides with the first optical axis J1.

The traveling direction of the second light L2 entered the angle conversion member 38 is changed so as to approach the direction parallel to the first optical axis J1 every time the second light L2 is totally reflected by the reflecting side surface 38c. This makes the angle conversion member 38 convert an exit angle distribution of the second light L2 emitted from the wavelength conversion member 30. More specifically, the angle conversion member 38 makes the maximum exit angle of the second light L2 at the exit surface 38b smaller than the maximum incidence angle of the second light L2 at the plane of incidence 38a.

In general, since the etendue of light defined by a product of the area of a light exit region and the maximum exit angle as a solid angle of the light is preserved, the etendue of the second light L2 is preserved before and after passing through the angle conversion member 38. As described above, the angle conversion member 38 has a configuration in which the area of the exit surface 38b is made larger than the area of the plane of incidence 38a. Therefore, from the viewpoint of etendue preservation, the angle conversion member 38 can make the maximum exit angle of the second light L2 at the exit surface 38b smaller than the maximum incidence angle of the second light L2 at the plane of incidence 38a.

The angle conversion member 38 is fixed to the wavelength conversion member 30 via an optical adhesive not shown so that the plane of incidence 38a faces the third surface 30c of the wavelength conversion member 30. That is, the angle conversion member 38 and the wavelength conversion member 30 are in contact with each other via the optical adhesive, and an air gap such as an air layer is not provided between the angle conversion member 38 and the wavelength conversion member 30. When an air gap is supposedly provided between the angle conversion member 38 and the wavelength conversion member 30, the second light L2 incident on the plane of incidence 38a of the angle conversion member 38 at an angle no smaller than the critical angle out of the second light L2 which reached the plane of incidence 38a is totally reflected by the plane of incidence 38a and cannot enter the angle conversion member 38. In contrast, when no air gap is provided between the angle conversion member 38 and the wavelength conversion member 30 as in the present embodiment, an amount of a lost component of the second light L2 that cannot enter the angle conversion member 38 due to the total reflection can be reduced. From the viewpoint described above, it is desirable that the refractive index of the angle conversion member 38 and the refractive index of the wavelength conversion member 30 are made to coincide with each other as much as possible.

Note that the configuration of the angle conversion member 38 is not limited to the present embodiment, and may be, for example, a compound parabolic concentrator (CPC). Substantially the same advantages as those when using the tapered rod can be obtained when using the CPC as the angle conversion member 38. Further, the light source device 21 is not required to include the angle conversion member 38.

The integrator optical system 50 includes a first lens array 52 and a second lens array 53. The integrator optical system 50, along with the superimposing optical system 56, functions as a homogenous illumination optical system that homogenizes the intensity distribution of the second light L2 emitted from the light source device 21 in each of the light modulation devices 4R, 4G which are illumination target regions. The second light L2 emitted via the exit surface 38b of the angle conversion member 38 enters the first lens array 52.

The first lens array 52 includes a plurality of first small lenses 52a. The first small lenses 52a are arranged in a matrix on a plane perpendicular to the first optical axis J1. The first small lenses 52a divide the second light L2 emitted from the angle conversion member 38 into a plurality of partial light beams. The first small lenses 52a each have a rectangular shape substantially similar to the shape of the image forming region of each of the light modulation devices 4R, 4G. Thus, the partial light beams emitted from the first lens array 52 are each efficiently incident on the image forming region of each of the light modulation devices 4R, 4G.

The second lens array 53 is disposed at the exit side of the first lens array 52. The second light L2 emitted from the first lens array 52 enters the second lens array 53. The second lens array 53 includes a plurality of second small lenses 53a corresponding to the plurality of first small lenses 52a of the first lens array 52. The second small lenses 53a are arranged in a matrix in a plane perpendicular to the first optical axis J1. The second lens array 53 forms an image of the second light L2 emitted from each of the first small lenses 52a of the first lens array 52 in the vicinity of the image forming region of each of the light modulation devices 4R, 4G in cooperation with the superimposing optical system 56.

Each of the first small lenses 52a of the first lens array 52 and each of the second small lenses 53a of the second lens array 53 have the same size in the present embodiment, but may instead have respective sizes different from each other. Further, the first small lens 52a of the first lens array 52 and the second small lens 53a of the second lens array 53 are arranged at positions where the optical axes thereof coincide with each other in the present embodiment, but may be arranged at positions where the optical axes thereof deviate from each other.

The polarization conversion element 55 includes a polarization separation layer that is not shown, and that directly transmits one linear polarization component out of the polarization components provided in the second light L2 emitted from the light source device 21 and reflects the other linear polarization component toward a direction perpendicular to the first optical axis J1, a reflecting layer that is not shown, and that reflects the other linear polarization component reflected by the polarization separation layer, toward a direction parallel to the first optical axis J1, and a wave plate that is not shown, and that converts the other linear polarization component reflected by the reflecting layer into the one linear polarization component. The polarization conversion element 55 converts the polarization direction of the second light L2 emitted from the second lens array 53. In more detail, the polarization conversion element 55 converts each of the partial light beams of the second light L2 which is divided by the first lens array 52, and is emitted from the second lens array 53 into linearly polarized light.

The second light L2 which was transmitted through the polarization conversion element 55 enters the superimposing optical system 56. The superimposing optical system 56 forms the homogenous illumination optical system that homogenizes the intensity distribution of the second light L2 in each of the light modulation devices 4R, 4G which are the illumination target regions in cooperation with the integrator optical system 50. The superimposing optical system 56 causes the second light L2 to enter the color separation optical system 3.

The pressing unit 60 shown in FIG. 5 presses the wavelength conversion member 30, that is, the light guide member against the support member 41. More specifically, the pressing unit 60 presses the second surface 30b of the wavelength conversion member 30 against the support surface 43 of the support member 41 by applying pressing force Fp toward the +Y side to the wavelength conversion member 30. In the present embodiment, the pressing unit 60 includes a pressing member 61, elastic members 62, and screws 63, 64.

The pressing member 61 presses the wavelength conversion member 30 against the support member 41. The pressing member 61 is a leaf spring extending in the Z-axis direction. The pressing member 61 has elasticity. One end portion 61a of the pressing member 61 faces the first inner surface 49b in the incident direction (the Y-axis direction). The elastic member 62 elastically deformable in the incident direction is disposed between the one end portion 61a and the first inner surface 49b. In the present embodiment, the elastic member 62 is a coil spring. The elastic member 62 is in contact with the one end portion 61a and the first inner surface 49b. When the screw 63 is inserted into the hole of the one end portion 61a and tightened into the first hole 49c, elastic force toward the -Y side is applied to the one end portion 61a by the elastic member 62. Accordingly, the one end portion 61a is pressed against a head of the screw 63 from the +Y side, and the position of the one end portion 61a in the incident direction is determined.

The other end portion 61c of the pressing member 61 faces the second inner surface 49g in the incident direction. The elastic member 62 is disposed between the other end portion 61c and the second inner surface 49g. The elastic member 62 is in contact with the other end portion 61c and the second inner surface 49g. When the screw 64 is inserted into the hole of the other end portion 61c and tightened into the second hole 49h, elastic force toward the -Y side is applied to the other end portion 61c by the elastic member 62. Accordingly, the other end portion 61c is pressed against a head of the screw 64 from the +Y side, and the position of the other end portion 61c in the incident direction is determined.

A central portion of the pressing member 61 presses the first surface 30a of the wavelength conversion member 30 from the -Y side. In this way, the pressing unit 60 presses the wavelength conversion member 30 against the support member 41. The pressing force Fp applied by the pressing unit 60 for pressing the wavelength conversion member 30 against the support member 41 is adjusted by the positions of the one end portion 61a and the other end portion 61c of the pressing member 61 in the incident direction (the Y-axis direction). The pressing force Fp increases as the position of each of the one end portion 61a and the other end portion 61c of the pressing member 61 moves toward the +Y side. The pressing force Fp decreases as the position of each of the one end portion 61a and the other end portion 61c of the pressing member 61 moves toward the -Y side. In the present embodiment, the positions of the one end portion 61a and the other end portion 61c of the pressing member in the incident direction can be adjusted by the temperature adjustment unit 70.

In the present embodiment, the temperature adjustment unit 70 adjusts a tightening amount of the screw 63 with respect to the first hole 49c and a tightening amount of the screw 64 with respect to the second hole 49h. In the present embodiment, the temperature adjustment unit 70 includes two motors 71. A shaft 72 is coupled to one of the motors 71. When one of the motors 71 is driven, the shaft 72 rotates about an axis parallel to the incident direction. The tip of the shaft 72 is fitted to the head of the screw 63. Accordingly, the tightening amount of the screw 63 with respect to the first hole 49c can be adjusted by one of the motors 71. The shaft 72 is also coupled to the other of the motors 71. When the other of the motors 71 is driven, the shaft 72 rotates about an axis parallel to the incident direction. The tip of the shaft 72 is fitted to the head of the screw 64. Accordingly, the tightening amount of the screw 64 with respect to the second hole 49h can be adjusted by the other of the motors 71.

As each of the tightening amount of the screw 63 with respect to the first hole 49c and the tightening amount of the screw 64 with respect to the second hole 49h increases, the position of each of the one end portion 61a and the other end portion 61c of the pressing member 61 moves toward the +Y side, and thus the pressing force Fp increases. As the pressing force Fp increases, the contact area between the second surface 30b of the wavelength conversion member 30 and the support surface 43 of the support member 41 increases, and thus the amount of heat transferred from the wavelength conversion member 30 to the support member 41 increases. This can reduce the temperature of the wavelength conversion member 30. In addition, as each of the tightening amount of the screw 63 with respect to the first hole 49c and the tightening amount of the screw 64 with respect to the second hole 49h decreases, the position of each of the one end portion 61a and the other end portion 61c of the pressing member 61 moves toward the -Y side, and thus the pressing force Fp decreases. As the pressing force Fp decreases, the contact area between the second surface 30b of the wavelength conversion member 30 and the support surface 43 of the support member 41 decreases, and thus the amount of heat transferred from the wavelength conversion member 30 to the support member 41 decreases. This can increase the temperature of the wavelength conversion member 30. Therefore, the temperature adjustment unit 70 adjusts the temperature of the wavelength conversion member 30 by adjusting the pressing force Fp applied by the pressing unit 60 for pressing the wavelength conversion member 30, that is, the light guide member, against the support member 41.

The measurement unit 95 shown in FIG. 2 measures a characteristic value Vc correlated with the temperature Tg of the wavelength conversion member 30, that is, the light guide member. In the following description, the characteristic value Vc correlated with the temperature of the wavelength conversion member 30, that is, the light guide member, may be simply referred to as a "characteristic value Vc" The measurement unit 95 is attached to the wavelength conversion member 30. In the present embodiment, the measurement unit 95 is a temperature sensor. The measurement unit 95 measures the temperature Tg of the wavelength conversion member 30. That is, in the present embodiment, the characteristic value Vc is the temperature Tg of the wavelength conversion member 30. In the present embodiment, the measurement unit 95 is attached to the -X side end portion of the first surface 30a of the wavelength conversion member 30. The position where the measurement unit 95 is attached to the wavelength conversion member 30 is not limited to the present embodiment. Further, the measurement unit 95 is not required to be attached to the wavelength conversion member 30. In this case, the measurement unit 95 is preferably a temperature sensor such as a radiation temperature sensor capable of measuring the temperature Tg of the wavelength conversion member 30 in a non-contact state with the wavelength conversion member 30. Further, the light source device 21 may include a plurality of measurement units 95. In this case, the temperature Tg of the wavelength conversion member 30 may be the maximum temperature of the temperatures measured by the measurement units 95, or may be an average temperature of the temperatures measured by the measurement units 95. In addition, each of the measurement units 95 is preferably disposed along the longitudinal direction (the X-axis direction).

In the present embodiment, the controller 90 is coupled to each of the measurement unit 95 and the temperature adjustment unit 70. The controller 90 controls the operation of the temperature adjustment unit 70. In the present embodiment, the controller 90 is a computer that controls the operation of the temperature adjustment unit 70. A control program for controlling the operation of the temperature adjustment unit 70 is installed in the controller 90. At least a part of the functions in the elements of the controller 90 is implemented by, for example, a processor such as a central processing unit (CPU) executing a control program, that is, software stored in a memory unit (not illustrated). The controller 90 includes a storage unit 91.

The storage unit 91 stores a conversion table Tb1 that defines a relationship between the temperature Tg of the wavelength conversion member 30 measured by the measurement unit 95 and the pressing force Fp. As the storage unit 91, a read only memory (ROM) and a recording medium such as a flash memory can be used.

FIG. 7 is a flowchart representing temperature control in the present embodiment. In the temperature control in the present embodiment, the temperature Tg of the wavelength conversion member 30 is maintained between the first temperature T1 and the second temperature T2. In the present embodiment, the second temperature T2 is higher than the first temperature T1.

First, the controller 90 sets (S10) the first temperature T1 and the second temperature T2. Each of the first temperature T1 and the second temperature T2 may be a predetermined temperature or may be a temperature appropriately determined from environmental conditions under which the light source device 21 is disposed, such as the temperature of the environment in which the projector 1 is installed and the temperature inside the projector 1. Then, the controller 90 acquires (S11) the temperature Tg of the wavelength conversion member 30 measured by the measurement unit 95, that is, the characteristic value Vc. When the temperature Tg of the wavelength conversion member 30 is lower than the first temperature T1 (S12), the controller 90 sets (S13) the pressing force Fp to new pressing force Fp (Tg) based on the conversion table Tb1 and the temperature Tg of the wavelength conversion member 30. As a result, the pressing force Fp set in advance can be reduced. Then, the controller 90 adjusts the pressing force Fp to the pressing force Fp newly set with the temperature adjustment unit 70. Accordingly, the contact area between the second surface 30b of the wavelength conversion member 30 and the support surface 43 of the support member 41 is reduced, and thus the amount of heat transferred from the wavelength conversion member 30 to the support member 41 is reduced. Therefore, the temperature of the wavelength conversion member 30 can be prevented from becoming too low.

When the temperature Tg of the wavelength conversion member 30 is equal to or higher than the first temperature T1 and the temperature Tg of the wavelength conversion member 30 is higher than the second temperature T2 (S12 and S14), the controller 90 sets (S15) the pressing force Fp to new pressing force Fp (Tg) based on the conversion table Tb1 and the temperature Tg of the wavelength conversion member 30. As a result, the pressing force Fp set in advance can be increased. Then, the controller 90 adjusts the pressing force Fp to the pressing force Fp newly set with the temperature adjustment unit 70. That is, when the temperature Tg of the wavelength conversion member 30 becomes higher than the predetermined temperature T2, the controller 90 causes the temperature adjustment unit 70 to increase the pressing force Fp. This increases the contact area between the second surface 30b of the wavelength conversion member 30 and the support surface 43 of the support member 41, and therefore, it is possible to increase the amount of heat transferred from the wavelength conversion member 30 to the support member 41. Therefore, it is possible to prevent the temperature of the wavelength conversion member 30 from becoming too high.

When the temperature Tg of the wavelength conversion member 30 is equal to or higher than the first temperature T1 and the temperature Tg of the wavelength conversion member 30 is equal to or lower than the second temperature T2 (S12 and S14), the controller 90 does not newly set the pressing force Fp and does not adjust the pressing force Fp with the temperature adjustment unit 70. From the above, in the temperature control in the present embodiment, the controller 90 controls the temperature adjustment unit 70 based on the temperature of the wavelength conversion member 30, that is, the characteristic value Vc correlated with the temperature of the wavelength conversion member 30. Accordingly, in the temperature control in the present embodiment, it is possible to prevent the temperature Tg of the wavelength conversion member 30 from becoming too low and the temperature Tg of the wavelength conversion member 30 from becoming too high.

According to the present embodiment, the light source device 21 includes the light source unit 34 having the light emitting element 36 that emits the first light L1, that is, the light, the wavelength conversion member 30 onto which the first light L1 emitted from the light emitting element 36 is incident, and which emits the second light L2, that is, the light guide member, the support member 41 that supports the wavelength conversion member 30, the pressing unit 60 that presses the wavelength conversion member 30 against the support member 41, the measurement unit 95 that measures the characteristic value Vc correlated with the temperature Tg of the wavelength conversion member 30, the controller 90 that acquires the characteristic value Vc measured by the measurement unit 95, and the temperature adjustment unit 70 that adjusts the temperature Tg of the wavelength conversion member 30, wherein the controller 90 controls the temperature adjustment unit 70 based on the characteristic value Vc. Therefore, in the state in which the light source device 21 is in operation, the temperature Tg of the wavelength conversion member 30 can be prevented from becoming too high as described above. Accordingly, since an increase in the temperature quenching of the second light L2 in the wavelength conversion member 30 can be suppressed, a decrease in the wavelength conversion efficiency of the wavelength conversion member 30 can be suppressed. Further, since the temperature Tg of the wavelength conversion member 30 can be prevented from becoming too high, the color gamut of the second light L2 emitted from the wavelength conversion member 30 can be prevented from decreasing. Therefore, it is possible to prevent the quality of the image projected by the projector 1 from deteriorating. Furthermore, since thermal deterioration of the wavelength conversion member 30 can be suppressed, the durability of the wavelength conversion member 30 can be enhanced.

According to the present embodiment, the characteristic value Vc is the temperature Tg of the wavelength conversion member 30, and the temperature adjustment unit 70 adjusts the pressing force Fp applied by the pressing unit 60 for pressing the wavelength conversion member 30 against the support member 41. Therefore, in the state in which the light source device 21 is in operation, the contact area between the second surface 30b of the wavelength conversion member 30 and the support surface 43 of the support member 41 can be adjusted. Thus, the amount of heat transferred from the wavelength conversion member 30 to the support member 41 can be adjusted. Therefore, since the amount of the heat released from the wavelength conversion member 30 to the outside of the light source device 21 via the support member 41 can be adjusted based on the temperature Tg of the wavelength conversion member 30, the temperature of the wavelength conversion member 30 can be prevented from becoming too high. Therefore, it is possible to prevent the wavelength conversion efficiency of the wavelength conversion member 30 from deteriorating and to prevent the quality of the image projected by the projector 1 from degrading.

Further, in the present embodiment, as described above, when the temperature Tg of the wavelength conversion member 30 is lower than the first temperature T1, the controller 90 causes the temperature adjustment unit 70 to reduce the pressing force Fp. Thus, as described above, the contact area between the second surface 30b of the wavelength conversion member 30 and the support surface 43 of the support member 41 can be reduced. Therefore, the area of the air layer between the wavelength conversion member 30 and the support surface 43 can be prevented from becoming too small. Therefore, it is possible to reduce the amount of the second light L2 which is emitted from the second surface 30b to the outside of the wavelength conversion member 30 and is then absorbed by the support surface 43 out of the second light L2 which propagates inside the wavelength conversion member 30 and then enters the second surface 30b. Therefore, the wavelength conversion efficiency of the wavelength conversion member 30 can more preferably be increased.

According to the present embodiment, the controller 90 causes the temperature adjustment unit 70 to increase the pressing force Fp when the temperature of the wavelength conversion member 30 becomes higher than the predetermined temperature T2. Therefore, as described above, when the temperature of the wavelength conversion member 30 becomes higher than the predetermined temperature T2, the contact area between the second surface 30b and the support surface 43 can be increased. Therefore, the amount of heat transferred from the wavelength conversion member 30 to the support member 41 can be increased. Therefore, the amount of heat released from the wavelength conversion member 30 to the outside of the light source device 21 via the support member 41 can be increased, and thus the temperature of the wavelength conversion member 30 can be prevented from becoming too high.

According to the present embodiment, there is adopted the wavelength conversion member 30 in which the light emitting elements 36 emit the first light L1 having the first wavelength band, and the light guide member includes the phosphor 33, converts the first light L1 into the second light L2 having the second wavelength band different from the first wavelength band, and emits the second light L2. As described above, in the present embodiment, the temperature Tg of the wavelength conversion member 30 can be prevented from becoming too high. Therefore, it is possible to prevent the wavelength conversion efficiency of the wavelength conversion member 30 from deteriorating and to prevent the quality of the image projected by the projector 1 from degrading.

According to the present embodiment, the projector 1 includes the light source device 21, the light modulation devices 4R, 4G, and 4B, which modulate the light emitted from the light source device 21, and the projection optical device 6, which projects the light modulated by the light modulation devices 4R, 4G, and 4B. As described above, in the present embodiment, since the wavelength conversion efficiency in the wavelength conversion member 30 can be increased, the amount of the second light L2 emitted from the wavelength conversion member 30 can be increased. Thus, the amount of the first light L1 required to cause the wavelength conversion member 30 to emit a predetermined amount of second light L2 can be reduced. Therefore since the amount of the first light L1 emitted by the light emitting elements 36 can be reduced, the power consumed by the projector 1 can be reduced.

### First Modified Example

A projector 101 according to a first modified example of the first embodiment will hereinafter be described.

The basic configuration of the projector 101 according to the present modified example is the same as that of the projector 1 according to the first embodiment, and the projector 101 according to the present modified example includes a pressing unit 160 and a temperature adjustment unit 170. In the following description, elements having substantially the same aspects as those of the projector 1 according to the first embodiment described above are denoted by the same reference characters to omit the description thereof.

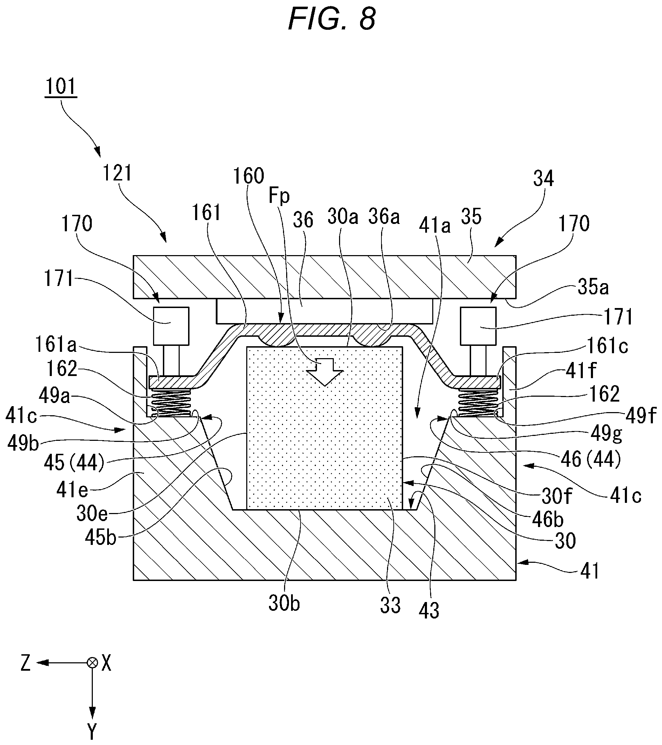

FIG. 8 is a cross-sectional view of a light source device 121 according to the present modified example. The light source device 121 includes the pressing unit 160 and the temperature adjustment unit 170. The pressing unit 160 presses the wavelength conversion member 30 against the support member 41. In the present modified example, the pressing unit 160 includes a pressing member 161 and elastic members 162.

The pressing member 161 presses the wavelength conversion member 30 against the support member 41. The pressing member 161 is a leaf spring extending in the Z-axis direction. The pressing member 161 has elasticity. One end portion 161a of the pressing member 161 faces the first inner surface 49b in the incident direction (the Y-axis direction). The elastic member 162 elastically deformable in the incident direction is disposed between the one end portion 161a and the first inner surface 49b. The elastic member 162 is in contact with the one end portion 161a and the first inner surface 49b. Elastic force toward the -Y side is applied to the one end portion 161a by the elastic member 162.

The other end portion 161c of the pressing member 161 faces the second inner surface 49g in the incident direction. The elastic member 162 is disposed between the other end portion 161c and the second inner surface 49g. The elastic member 162 is in contact with the other end portion 161c and the second inner surface 49g. Elastic force toward the -Y side is applied to the other end portion 161c by the elastic member 162.

A central portion of the pressing member 161 presses the first surface 30a of the wavelength conversion member 30 from the -Y side. The pressing force Fp increases as the position of each of the one end portion 161a and the other end portion 161c of the pressing member 161 moves toward the +Y side. The pressing force Fp decreases as the position of each of the one end portion 161a and the other end portion 161c of the pressing member 161 moves toward the -Y side. In the present modified example, the positions of the one end portion 161a and the other end portion 161c of the pressing member in the incident direction can be adjusted by the temperature adjustment unit 170.

In the present modified example, the temperature adjustment unit 170 adjusts the pressing force for pressing each of the one end portion 161a and the other end portion 161c toward the +Y side. In the present modified example, the temperature adjustment unit 170 includes two air cylinders 171. One of the air cylinders 171 adjusts pressurizing force for pressurizing the one end portion 161a toward the +Y side. Accordingly, the position of the one end portion 161a in the incident direction (the +Y-axis direction) can be adjusted. The other air cylinder 171 adjusts a pressurizing force for pressurizing the other end portion 161c to the +Y side. Accordingly, the position of the other end portion 161c in the incident direction can be adjusted.

As the pressing force for pressing each of the one end portion 161a and the other end portion 161c increases, the position of each of the one end portion 161a and the other end portion 161c moves toward the +Y side, and thus the pressing force Fp increases. As the pressing force Fp increases, the amount of heat transferred from the wavelength conversion member 30 to the support member 41 increases, and therefore, the temperature of the wavelength conversion member 30 can be reduced. Further, as the pressing force for pressing each of the one end portion 161a and the other end portion 161c decreases, the position of each of the one end portion 161a and the other end portion 161c moves toward the -Y side, and thus the pressing force Fp decreases. Since the amount of heat transferred from the wavelength conversion member 30 to the support member 41 decreases as the pressing force Fp decreases, the temperature of the wavelength conversion member 30 can be increased. Therefore, the temperature adjustment unit 170 adjusts the temperature of the wavelength conversion member 30 by adjusting the pressing force Fp applied by the pressing unit 160 for pressing the wavelength conversion member 30 against the support member 41. Other configurations and so on of the light source device 121 according to the present modified example are substantially the same as those of the light source device 21 according to the first embodiment described above.

The temperature control in the present modified example is substantially the same as the temperature control in the first embodiment described above. That is, when the temperature Tg of the wavelength conversion member 30 is lower than the first temperature T1, the controller 90 reduces the pressing force Fp set in advance based on the conversion table Tb1 and the temperature Tg of the wavelength conversion member 30. Then, the controller 90 causes the temperature adjustment unit 170 to adjust the pressing force Fp to pressing force Fp newly set to thereby reduce the contact area between the second surface 30b of the wavelength conversion member 30 and the support surface 43 of the support member 41, to prevent the temperature of the wavelength conversion member 30 from becoming too low. When the temperature Tg of the wavelength conversion member 30 is higher than the second temperature T2, the controller 90 increases the pressing force Fp set in advance. Then, the controller 90 adjusts the pressing force Fp to the pressing force Fp newly set with the temperature adjustment unit 170 to thereby increase the contact area between the second surface 30b of the wavelength conversion member 30 and the support surface 43 of the support member 41, and thus, the temperature of the wavelength conversion member 30 can be prevented from becoming too high. Accordingly, in the temperature control in the present modified example, it is possible to prevent the temperature Tg of the wavelength conversion member 30 from becoming too low and the temperature Tg of the wavelength conversion member 30 from becoming too high.

According to the present modified example, the controller 90 controls the temperature adjustment unit 170 based on the temperature Tg of the wavelength conversion member 30, that is, the characteristic value Vc. Therefore, in the state in which the light source device 121 is in operation, the temperature Tg of the wavelength conversion member 30 can be prevented from becoming too high as described above. Therefore, as described above, it is possible to prevent the wavelength conversion efficiency of the wavelength conversion member 30 from deteriorating and to prevent the quality of the image projected by the projector 101 from degrading.

### Second Modified Example

A projector 201 according to a second modified example of the first embodiment will hereinafter be described.

The basic configuration of the projector 201 according to the present modified example is the same as that of the projector 1 according to the first embodiment, and the projector 201 according to the present modified example includes a pressing unit 260 and a temperature adjustment unit 270. In the following description, elements having substantially the same aspects as those of the projector 1 according to the first embodiment described above are denoted by the same reference characters to omit the description thereof.

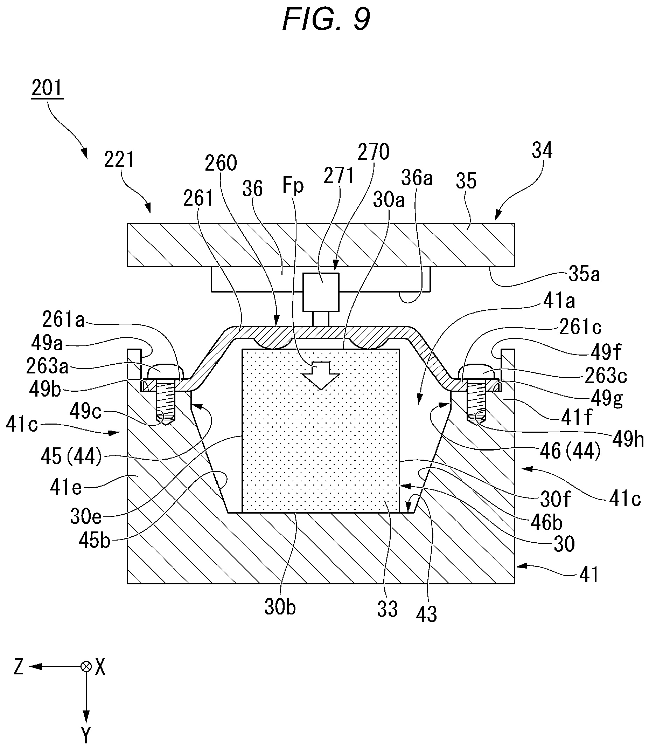

FIG. 9 is a cross-sectional view of a light source device 221 according to the present modified example. The light source device 221 includes the pressing unit 260 and the temperature adjustment unit 270. The pressing unit 260 presses the wavelength conversion member 30 against the support member 41. In the present modified example, the pressing unit 260 includes a pressing member 261 and screws 263a, 263c.

The pressing member 261 presses the wavelength conversion member 30 against the support member 41. The pressing member 261 is a leaf spring extending in the Z-axis direction. The pressing member 261 has elasticity. One end portion 261a of the pressing member 261 is fixed to the first inner surface 49b with the screw 263a. The other end portion 261c of the pressing member 261 is fixed to the second inner surface 49g with the screw 263c. A central portion of the pressing member 261 presses the first surface 30a of the wavelength conversion member 30 from the -Y side. The pressing force Fp applied by the pressing unit 260 for pressing the wavelength conversion member 30 can be adjusted by the temperature adjustment unit 270.

In the present modified example, the temperature adjustment unit 270 adjusts the pressing force for pressing the central portion of the pressing member 261 toward the +Y side. In the present modified example, the temperature adjustment unit 270 includes an air cylinder 271. The air cylinder 271 adjusts pressurizing force for pressurizing the central portion of the pressing member 261 toward the +Y side. Thus, the temperature adjustment unit 270 can adjust the pressing force Fp applied by the pressing unit 260 for pressing the wavelength conversion member 30.

The pressing force Fp increases as the pressing force applied by the temperature adjustment unit 270 for pressing the central portion of the pressing member 261 increases. As the pressing force Fp increases, the amount of heat transferred from the wavelength conversion member 30 to the support member 41 increases, and therefore, the temperature of the wavelength conversion member 30 can be reduced. Further, the pressing force Fp decreases as the pressing force applied by the temperature adjustment unit 270 for pressing the central portion of the pressing member 261 decreases. Since the amount of heat transferred from the wavelength conversion member 30 to the support member 41 decreases as the pressing force Fp decreases, the temperature of the wavelength conversion member 30 can be increased. Therefore, the temperature adjustment unit 270 adjusts the temperature of the wavelength conversion member 30 by adjusting the pressing force Fp applied by the pressing unit 260 for pressing the wavelength conversion member 30 against the support member 41. Other configurations and so on of the light source device 221 according to the present modified example are substantially the same as those of the light source device 21 according to the first embodiment described above. Further, the temperature control in the present modified example is substantially the same as the temperature control in the first embodiment described above.

According to the present modified example, the controller 90 controls the temperature adjustment unit 270 based on the temperature Tg of the wavelength conversion member 30, that is, the characteristic value Vc. Therefore, in the state in which the light source device 221 is in operation, the temperature Tg of the wavelength conversion member 30 can be prevented from becoming too high as described above. Therefore, as described above, it is possible to prevent the wavelength conversion efficiency of the wavelength conversion member 30 from deteriorating and to prevent the quality of the image projected by the projector 201 from degrading.

### Second Embodiment

A projector 301 according to a second embodiment will hereinafter be described.

The basic configuration of the projector 301 according to the present embodiment is substantially the same as that of the projector 1 according to the first embodiment, and the projector 301 according to the present embodiment includes a measurement unit 395 and a mirror 396. In the following description, elements having substantially the same aspects as those of the projector 1 according to the first embodiment described above are denoted by the same reference characters to omit the description thereof.

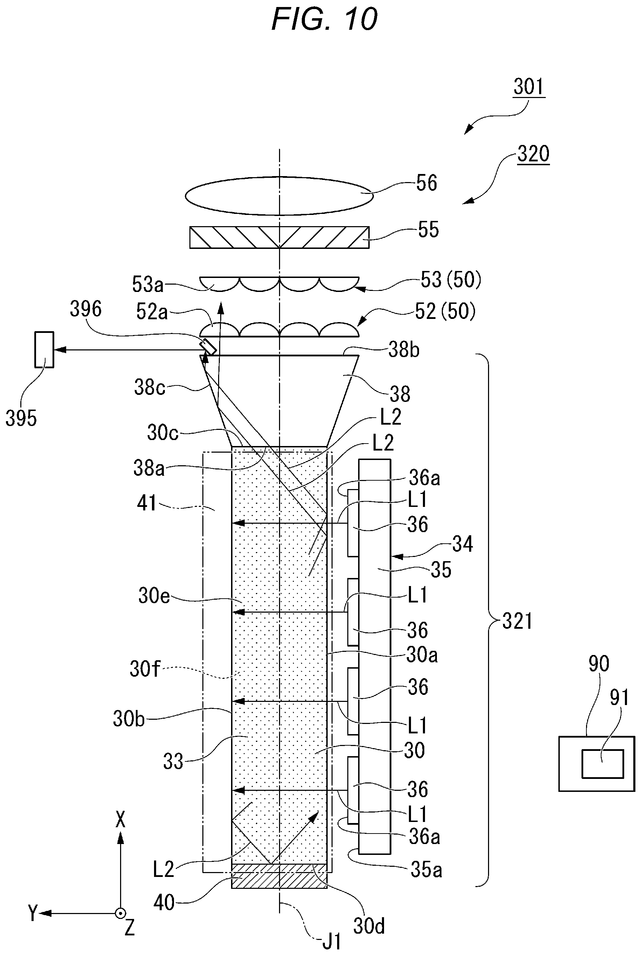

FIG. 10 is a schematic configuration diagram of a first illumination device 320 in the present embodiment. As described above, a light source device 321 according to the present embodiment includes the measurement unit 395 and the mirror 396. As shown in FIG. 10, in the present embodiment, the mirror 396 is disposed between the angle conversion member 38 and the first lens array 52. More specifically, the mirror 396 is disposed between an outer edge portion of the angle conversion member 38 and an outer edge portion of the first lens array 52. The mirror 396 reflects, toward the measurement unit 395, a part of the second light L2 emitted from the exit surface 38b of the angle conversion member 38. Thus, a part of the second light L2 is incident onto the measurement unit 395. Note that a place where the mirror 396 is disposed is not particularly limited, and the mirror 396 may be disposed, for example, between the first lens array 52 and the second lens array 53 or may be disposed at the exit side of the superimposing optical system 56.

In the present embodiment, the measurement unit 395 is a known spectrophotometer capable of measuring the chromaticity of light. In the present embodiment, the measurement unit 395 measures the chromaticity Cr of the second light L2. As described above, when the temperature Tg of the wavelength conversion member 30 is too high, the light intensity of the second light L2 in the wavelength range of 490 nm to 600 nm decreases, and the wavelength spectrum shifts toward the long wavelength side. That is, when the temperature Tg of the wavelength conversion member 30 is too high, the chromaticity Cr of the second light L2 shifts toward the long wavelength side. That is, the chromaticity Cr of the second light L2 correlates with the temperature Tg of the wavelength conversion member 30. In the present embodiment, the characteristic value Vc correlated with the temperature Tg of the wavelength conversion member 30 is the chromaticity Cr of the second light L2 emitted from the wavelength conversion member 30, that is, the light guide member. Note that although not illustrated, the configurations of the pressing unit 60 and the temperature adjustment unit 70 of the present embodiment are substantially the same as the configurations of the pressing unit 60 and the temperature adjustment unit 70 of the first embodiment described above. Therefore, the temperature adjustment unit 70 adjusts the pressing force Fp applied by the pressing unit 60 for pressing the wavelength conversion member 30 against the support member 41. Other configurations and so on of the light source device 321 according to the present embodiment are substantially the same as those of the light source device 21 according to the first embodiment described above.

In the present embodiment, the controller 90 is coupled to each of the measurement unit 395 and the temperature adjustment unit 70. The storage unit 91 stores a conversion table Tb2 that defines a relationship between the chromaticity Cr of the second light L2 measured by the measurement unit 395 and the pressing force Fp.

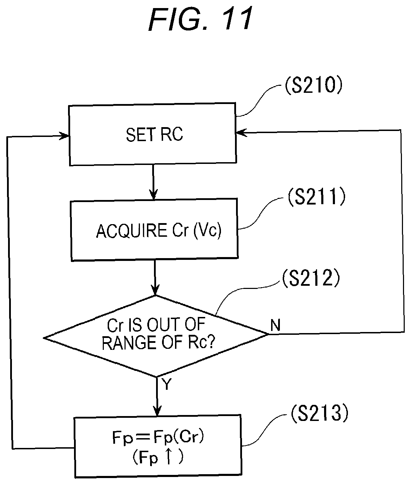

FIG. 11 is a flowchart representing temperature control in the present embodiment. In the temperature control in the present embodiment, the chromaticity Cr of the second light L2 is maintained in a predetermined chromaticity range Rc.

First, the controller 90 sets (S210) the chromaticity range Rc. The chromaticity range Rc may be a predetermined chromaticity range Rc or may be a chromaticity range Rc appropriately determined from environmental conditions in which the light source device 21 is disposed, such as the temperature of the environment in which the projector 1 is installed and the temperature inside the projector 1. Then, the controller 90 acquires (S211) the chromaticity Cr of the second light L2 measured by the measurement unit 395, that is, the characteristic value Vc. When the chromaticity Cr of the second light L2 is out of the chromaticity range Rc, when the chromaticity Cr of the second light L2 is shifted toward the longer wavelength side of the chromaticity range Rc (S212) in the present embodiment, the controller 90 sets (S213) the pressing force Fp to new pressing force Fp (Tg) based on the conversion table Tb2 and the chromaticity Cr of the second light L2. As a result, the pressing force Fp set in advance can be increased. Then, the controller 90 adjusts the pressing force Fp to the pressing force Fp newly set with the temperature adjustment unit 70. That is, when the chromaticity Cr of the second light L2 emitted by the wavelength conversion member 30 deviates toward the longer wavelength side from the predetermined chromaticity range Rc, the controller 90 causes the temperature adjustment unit 70 to increase the pressing force Fp. This increases the contact area between the second surface 30b of the wavelength conversion member 30 and the support surface 43 of the support member 41, and therefore, it is possible to increase the amount of heat transferred from the wavelength conversion member 30 to the support member 41. Therefore, it is possible to prevent the temperature of the wavelength conversion member 30 from becoming too high.

According to the present embodiment, the characteristic value Vc is the chromaticity Cr of the second light L2 emitted by the wavelength conversion member 30, that is, the light guide member, and the temperature adjustment unit 70 adjusts the pressing force Fp applied by the pressing unit 60 for pressing the wavelength conversion member 30 against the support member 41. Therefore, the amount of heat transferred from the wavelength conversion member 30 to the support member 41 can be adjusted in the state in which the light source device 321 is in operation. Thus, the amount of heat released from the wavelength conversion member 30 to the outside of the light source device 321 via the support member 41 can be adjusted based on the chromaticity Cr of the second light L2, which is the characteristic value Vc related to the temperature Tg of the wavelength conversion member 30, and therefore, the temperature of the wavelength conversion member 30 can be prevented from becoming too high. Therefore, it is possible to prevent the wavelength conversion efficiency of the wavelength conversion member 30 from deteriorating and to prevent the quality of the image projected by the projector 301 from degrading.

According to the present embodiment, when the chromaticity Cr of the second light L2 emitted by the wavelength conversion member 30 deviates toward the longer wavelength side from the predetermined chromaticity range Rc, the controller 90 causes the temperature adjustment unit 70 to increase the pressing force Fp. Therefore, as described above, when the temperature Tg of the wavelength conversion member 30 increases, the amount of heat transferred from the wavelength conversion member 30 to the support member 41 can be increased by the temperature adjustment unit 70. Therefore, the amount of heat released from the wavelength conversion member 30 to the outside of the light source device 321 via the support member 41 can be increased, and thus the temperature of the wavelength conversion member 30 can be prevented from becoming too high.

### Third Embodiment

A projector 401 according to a third embodiment will hereinafter be described.

The basic configuration of the projector 401 according to the present embodiment is substantially the same as that of the projector 1 according to the first embodiment, and the projector 401 according to the present embodiment includes a heat radiation unit 447 and a temperature adjustment unit 470. In the following description, elements having substantially the same aspects as those of the projector 1 according to the first embodiment described above are denoted by the same reference characters to omit the description thereof.

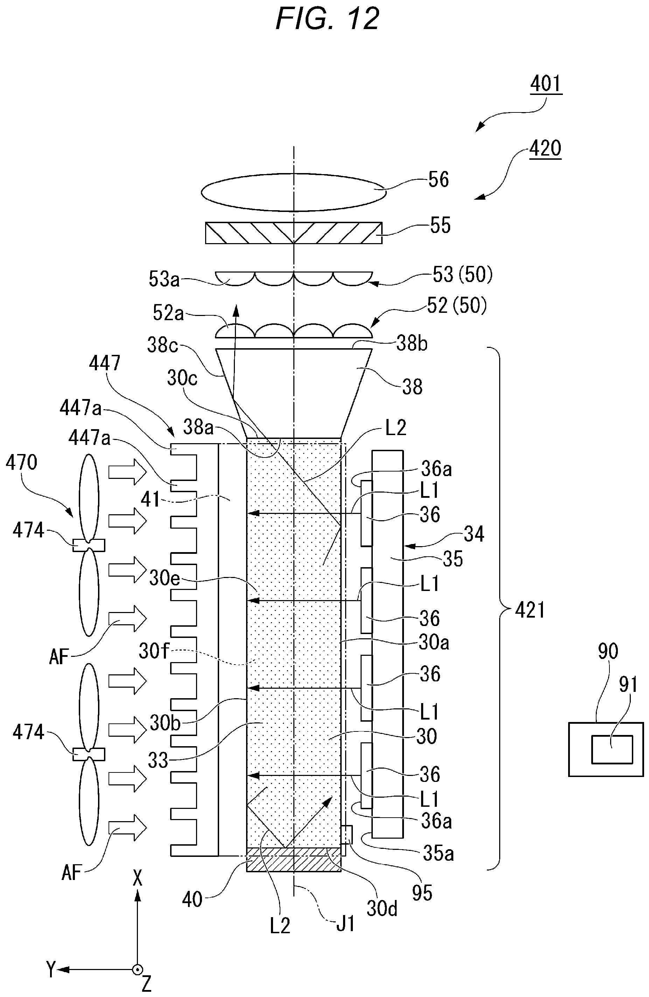

FIG. 12 is a schematic configuration diagram of a first illumination device 420 in the present embodiment. As described above, the light source device 421 according to the present embodiment includes the heat radiation unit 447 and the temperature adjustment unit 470. As illustrated in FIG. 12, the heat radiation unit 447 is a heat sink fixed to a surface of the support member 41 facing the +Y side. The heat radiation unit 447 is made of metal. In the present embodiment, the heat radiation unit 447 is made of aluminum. The thermal conductivity of the heat radiation unit 447 is preferably higher than the thermal conductivity of the support member 41. The heat radiation unit 447 includes a plurality of heat radiation fins 447a.

Each of the heat radiation fins 447a protrudes in the incident direction (the Y-axis direction). Although not illustrated, each of the heat radiation fins 447a has a plate shape extending in the Z-axis direction. The heat radiation fins 447a are arranged at intervals along the longitudinal direction (the X-axis direction). Note that each of the heat radiation fins 447a may have a plate shape extending in the longitudinal direction. In this case, the heat radiation fins 447a are arranged at intervals along the Z-axis direction. In the present embodiment, since the heat radiation unit 447 includes the plurality of heat radiation fins 447a, the surface area of the heat radiation unit 447 can be increased. Thus, the amount of the heat released from the support member 41 to the outside of the light source device 421 via the heat radiation unit 447 can be increased. Therefore, it is possible to increase the amount of heat released from the wavelength conversion member 30 to the outside of the light source device 421 via the support member 41 and the heat radiation unit 447. Note that the light source device 421 is not required to include the heat radiation unit 447.

In the present embodiment, the temperature adjustment unit 470 is a blower unit 474 that sends air to at least one of the support member 41 and the wavelength conversion member 30. That is, the light source device 421 includes the blower unit 474. In the present embodiment, the blower unit 474 is a blower fan. In the present embodiment, the temperature adjustment unit 470 sends air to each of the support member 41 and the heat radiation unit 447. The temperature adjustment unit 470 may send air to the wavelength conversion member 30. In the present embodiment, the temperature adjustment unit 470 adjusts an air blowing amount Af as an amount of the air sent by the blower unit 474 to each of the support member 41 and the heat radiation unit 447 with the rotation speed of the blower fan.

As the air blowing amount Af which is an amount of the air sent by the temperature adjustment unit 470 to each of the support member 41 and the heat radiation unit 447 increases, the amount of the heat released from each of the support member 41 and the heat radiation unit 447 to the outside of the light source device 421 increases. Therefore, it is possible to increase the amount of the heat released from the wavelength conversion member 30 to the outside of the light source device 421 via the support member 41 and the heat radiation unit 447. This can reduce the temperature of the wavelength conversion member 30. Further, as the air blowing amount Af which is an amount of the air sent to each of the support member 41 and the heat radiation unit 447 by the temperature adjustment unit 470 decreases, the amount of the heat released from each of the support member 41 and the heat radiation unit 447 to the outside of the light source device 421 decreases. Therefore, it is possible to reduce the amount of the heat released from the wavelength conversion member 30 to the outside of the light source device 421 via the support member 41 and the heat radiation unit 447. This can increase the temperature of the wavelength conversion member 30. Therefore, the temperature adjustment unit 470 adjusts the temperature of the wavelength conversion member 30 by adjusting the air blowing amount Af which is an amount of the air sent by the blower unit 474 to each of the support member 41 and the heat radiation unit 447.

The measurement unit 95 in the present embodiment measures the temperature Tg of the wavelength conversion member 30 similarly to the measurement unit 95 in the first embodiment. That is, in the present embodiment, the characteristic value Vc correlated with the temperature Tg of the wavelength conversion member 30 is the temperature Tg of the wavelength conversion member 30. Other configurations and so on of the light source device 421 according to the present embodiment are substantially the same as those of the light source device 21 according to the first embodiment described above.

In the present embodiment, the controller 90 is coupled to each of the measurement unit 95 and the temperature adjustment unit 470. The storage unit 91 stores a conversion table Tb3 that defines a relationship between the temperature Tg of the wavelength conversion member 30 measured by the measurement unit 95 and the air blowing amount Af.

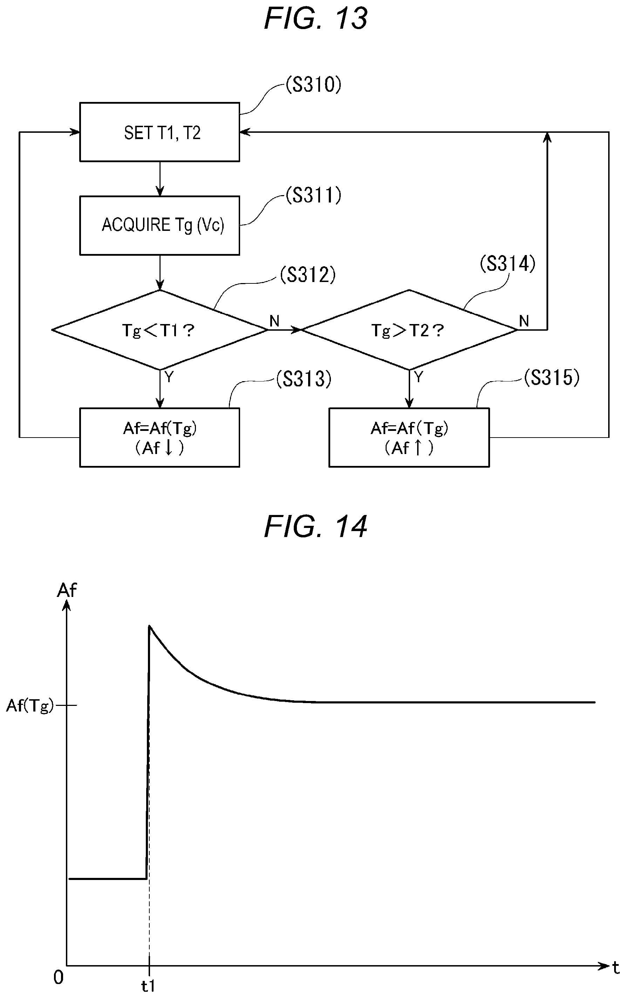

FIG. 13 is a flowchart representing the temperature control in the present embodiment. In the temperature control in the present embodiment, the temperature Tg of the wavelength conversion member 30 is maintained between the first temperature T1 and the second temperature T2.

First, the controller 90 sets (S310) the first temperature T1 and the second temperature T2. Then, the controller 90 acquires (S311) the temperature Tg of the wavelength conversion member 30 measured by the measurement unit 95, that is, the characteristic value Vc. When the temperature Tg of the wavelength conversion member 30 is lower than the first temperature T1 (S312), the controller 90 sets (S313) the air blowing amount Af to a new air blowing amount Af (Tg) based on the conversion table Tb3 and the temperature Tg of the wavelength conversion member 30. Thus, the air blowing amount Af set in advance can be reduced. Then, the controller 90 causes the temperature adjustment unit 470 to adjust the air blowing amount Af to the air blowing amount Af newly set. Thus, the amount of the heat released from the wavelength conversion member 30 to the outside of the light source device 421 via the support member 41 and the heat radiation unit 447 is reduced. Therefore, the temperature of the wavelength conversion member 30 can be prevented from becoming too low.

When the temperature Tg of the wavelength conversion member 30 is equal to or higher than the first temperature T1 and the temperature Tg of the wavelength conversion member 30 is higher than the second temperature T2 (S312 and S314), the controller 90 sets (S315) the air blowing amount Af to the new air blowing amount Af (Tg) based on the conversion table Tb3 and the temperature Tg of the wavelength conversion member 30. Thus, the air blowing amount Af set in advance can be increased. Then, the controller 90 causes the temperature adjustment unit 470 to adjust the air blowing amount Af to the air blowing amount Af newly set. That is, when the temperature Tg of the wavelength conversion member 30 becomes higher than the predetermined temperature T2, the controller 90 causes the temperature adjustment unit 470 to increase the air blowing amount Af. Thus, the amount of the heat released from the wavelength conversion member 30 to the outside of the light source device 421 via the support member 41 and the heat radiation unit 447 is increased. Therefore, it is possible to prevent the temperature of the wavelength conversion member 30 from becoming too high.

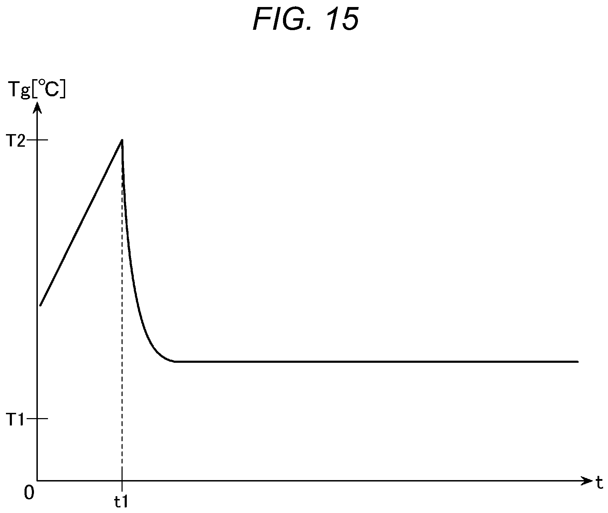

Note that when increasing the air blowing amount Af, the controller 90 may set the air blowing amount Af to an air blowing amount larger than the air blowing amount Af (Tg) thus set, and then gradually reduce the air blowing amount Af to the air blowing amount Af (Tg) as illustrated in FIG. 14. Thus, as shown in FIG. 15, the temperature Tg of the wavelength conversion member 30 can be lowered with good responsiveness immediately after the air blowing amount Af is increased.

As shown in FIG. 13, when the temperature Tg of the wavelength conversion member 30 is equal to or higher than the first temperature T1 and the temperature Tg of the wavelength conversion member 30 is equal to or lower than the second temperature T2 (S312 and S314), the controller 90 does not newly set the air blowing amount Af and does not adjust the air blowing amount Af with the temperature adjustment unit 470. From the above, in the temperature control in the present embodiment, the controller 90 controls the temperature adjustment unit 470 based on the temperature Tg of the wavelength conversion member 30, that is, the characteristic value Vc correlated with the temperature of the wavelength conversion member 30. Accordingly, in the temperature control in the present embodiment, it is possible to prevent the temperature Tg of the wavelength conversion member 30 from becoming too low and the temperature Tg of the wavelength conversion member 30 from becoming too high.

According to the present embodiment, the light source device 421 includes the blower unit 474 that sends air to at least one of the support member 41 and the wavelength conversion member 30, that is, the light guide member, the characteristic value Vc is the temperature Tg of the wavelength conversion member 30, and the temperature adjustment unit 470 adjusts the air blowing amount Af which is an amount of the air sent by the blower unit 474 to at least one of the support member 41 and the wavelength conversion member 30. Therefore, in the present embodiment, in the state in which the light source device 421 is in operation, it is possible to adjust the amount of the heat released from the support member 41 to the outside of the light source device 421 as described above. In this way, since the amount of the heat released from the wavelength conversion member 30 to the outside of the light source device 421 via the support member 41 can be adjusted based on the temperature Tg of the wavelength conversion member 30, the temperature of the wavelength conversion member 30 can be prevented from becoming too high. Therefore, it is possible to prevent the wavelength conversion efficiency of the wavelength conversion member 30 from deteriorating and to prevent the quality of the image projected by the projector 401 from degrading.

According to the present embodiment, when the temperature Tg of the wavelength conversion member 30 becomes higher than the predetermined temperature T2, the controller 90 causes the temperature adjustment unit 470 to increase the air blowing amount Af. Therefore, as described above, since the amount of the heat released from the wavelength conversion member 30 to the outside of the light source device 421 via the support member 41 can be increased by the temperature adjustment unit 470, the temperature of the wavelength conversion member 30 can be prevented from becoming too high.

Further, in the present embodiment, the light source device 421 includes the heat radiation unit 447 described above, and the temperature adjustment unit 470 sends air to each of the support member 41 and the heat radiation unit 447. Therefore, as described above, since it is possible to increase the amount of the heat released from the wavelength conversion member 30 to the outside of the light source device 421, it is possible to more suitably prevent the temperature of the wavelength conversion member 30 from becoming too high.

### Fourth Embodiment

A projector 501 according to a fourth embodiment will hereinafter be described.

The basic configuration of the projector 501 according to the present embodiment is substantially the same as that of the projector 401 according to the fourth embodiment, and the projector 501 according to the present embodiment includes the measurement unit 395 and the mirror 396. In the following description, elements having substantially the same aspects as those of the projector 401 according to the fourth embodiment described above are denoted by the same reference characters to omit the description thereof.

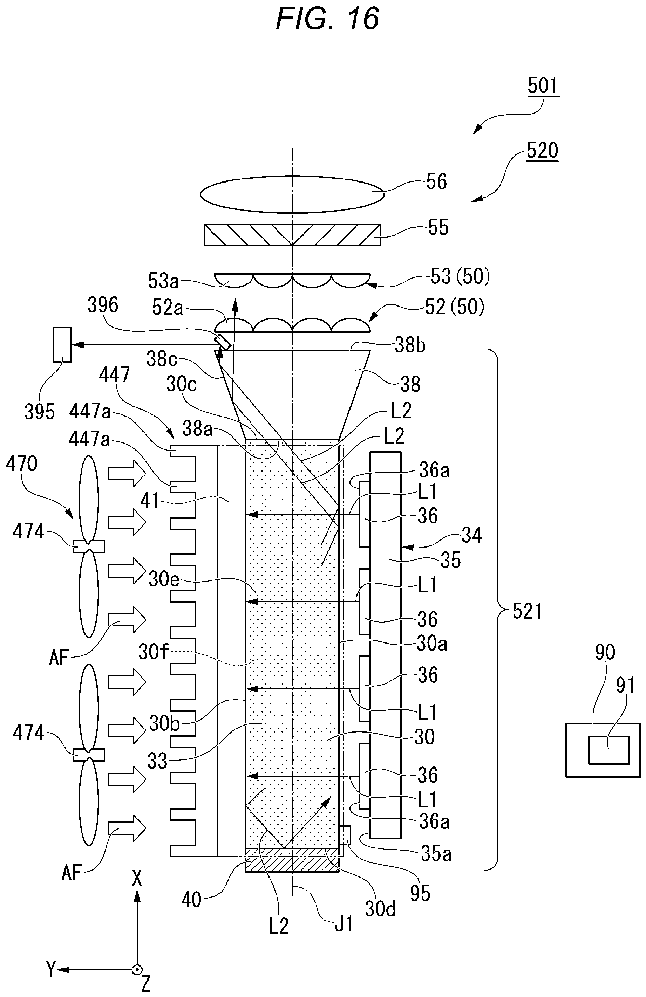

FIG. 16 is a schematic configuration diagram of a first illumination device 520 in the present embodiment. As described above, a light source device 521 according to the present embodiment includes the measurement unit 395 and the mirror 396. The configurations of the measurement unit 395 and the mirror 396 of the present embodiment are substantially the same as the configurations of the measurement unit 395 and the mirror 396 of the second embodiment described above. That is, the mirror 396 reflects, toward the measurement unit 395, a part of the second light L2 emitted from the exit surface 38b of the angle conversion member 38. The measurement unit 395 measures the chromaticity Cr of the second light L2 emitted by the wavelength conversion member 30. In the present embodiment, the characteristic value Vc correlated with the temperature Tg of the wavelength conversion member 30 is the chromaticity Cr of the second light L2 emitted from the wavelength conversion member 30, that is, the light guide member. Note that the temperature adjustment unit 470 of the present embodiment is substantially the same as the temperature adjustment unit 470 of the third embodiment described above. Therefore, the temperature adjustment unit 470 adjusts the air blowing amount Af which is an amount of the air sent by the blower unit 474 to at least one of the support member 41 and the wavelength conversion member 30. Further, the light source device 421 includes the blower unit 474 that blows air to at least one of the support member 41 and the wavelength conversion member 30. Other configurations and so on of the light source device 521 according to the present embodiment are substantially the same as those of the light source device 21 according to the first embodiment described above.

In the present embodiment, the controller 90 is coupled to each of the measurement unit 395 and the temperature adjustment unit 470. The storage unit 91 stores a conversion table Tb4 that defines a relationship between the chromaticity Cr of the second light L2 measured by the measurement unit 395 and the air blowing amount Af.

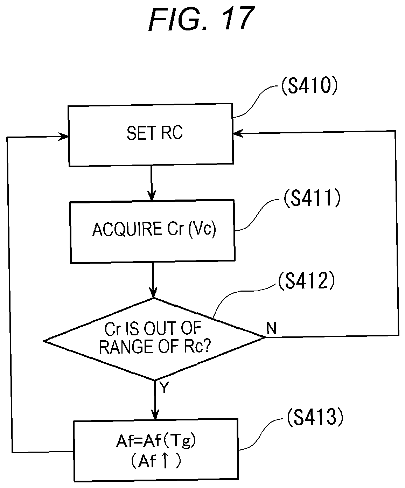

FIG. 17 is a flowchart representing the temperature control in the present embodiment. In the temperature control in the present embodiment, the chromaticity Cr of the second light L2 is maintained in a predetermined chromaticity range Rc.

First, the controller 90 sets (S410) the chromaticity range Rc. Then, the controller 90 acquires (S411) the chromaticity Cr of the second light L2 measured by the measurement unit 395, that is, the characteristic value Vc. When the chromaticity Cr of the second light L2 is out of the chromaticity range Rc, when the chromaticity Cr of the second light L2 is shifted toward the longer wavelength side of the chromaticity range Rc (S412) in the present embodiment, the controller 90 sets (S413) the air blowing amount Af to a new air blowing amount Af (Tg) based on the conversion table Tb4 and the chromaticity Cr of the second light L2. Thus, the air blowing amount Af set in advance can be increased. Then, the controller 90 causes the temperature adjustment unit 470 to adjust the air blowing amount Af to the air blowing amount Af newly set. That is, when the chromaticity Cr of the second light L2 emitted by the wavelength conversion member 30 deviates toward the longer wavelength side from the predetermined chromaticity range Rc, the controller 90 causes the temperature adjustment unit 470 to increase the air blowing amount Af. Thus, the amount of the heat released from the support member 41 and the heat radiation unit 447 increases. Therefore, it is possible to prevent the temperature of the wavelength conversion member 30 from becoming too high.

According to the present embodiment, the light source device 521 includes the blower unit 474 that sends air to at least one of the support member 41 and the wavelength conversion member 30, the characteristic value Vc is the chromaticity Cr of the second light L2 emitted by the wavelength conversion member 30, and the temperature adjustment unit 470 adjusts the air blowing amount Af which is an amount of the air sent by the blower unit 474 to at least one of the support member 41 and the wavelength conversion member 30. Therefore, in a state in which the light source device 521 is in operation, the amount of the heat released from the wavelength conversion member 30 to the outside of the light source device 521 via the support member 41 can be adjusted. Therefore, the amount of heat released from the wavelength conversion member 30 to the outside of the light source device 521 via the support member 41 can be adjusted based on the chromaticity Cr of the second light L2, which is the characteristic value Vc related to the temperature Tg of the wavelength conversion member 30, and therefore, the temperature of the wavelength conversion member 30 can be prevented from becoming too high. Therefore, it is possible to prevent the wavelength conversion efficiency of the wavelength conversion member 30 from deteriorating and to prevent the quality of the image projected by the projector 501 from degrading.

According to the present embodiment, when the chromaticity Cr of the second light L2 emitted by the wavelength conversion member 30 deviates toward the longer wavelength side from the predetermined chromaticity range Rc, the controller 90 causes the temperature adjustment unit 470 to increase the air blowing amount Af. Therefore, as described above, when the temperature of the wavelength conversion member 30 becomes high, the amount of the heat released from the wavelength conversion member 30 to the outside of the light source device 521 via the support member 41 can be increased by the temperature adjustment unit 470. Therefore, it is possible to prevent the temperature of the wavelength conversion member 30 from becoming too high.

The embodiments of the present disclosure have been described above, and the technical scope of the present disclosure is not limited to the embodiments described above, and various changes can be made thereto without departing from the intent of the present disclosure. Further, an aspect of the present disclosure can have a configuration that is an appropriate combination of the characteristic portions in the embodiments described above.

In the embodiments described above, an example of applying the present disclosure to the light source device equipped with the wavelength conversion member is cited, but it is possible to apply the present disclosure to a light source device in which the incident light is propagated without performing the wavelength conversion, and is then emitted with, for example, the angle distribution controlled instead of the configuration described above. In this case, the wavelength conversion member in the embodiment described above is replaced with a light guide member, and the light emitted from the light emitting elements is emitted to the angle conversion member as light having the same wavelength band.

The specific description of the shapes, the numbers, the arrangements, the materials, and the like of the elements of the light source device and the projector are not limited to those in the embodiment described above, but can be modified as appropriate. Further, in the embodiment described above, the example in which the light source device according to the present disclosure is installed in the projector using the liquid crystal panels is shown, but this is not a limitation. The light source device according to the present disclosure may be applied to a projector using digital micromirror devices as the light modulation devices. Further, the projector is not required to include the plurality of light modulation devices and may include just a single light modulation device.

In the embodiment described above, the example in which the light source device according to the present disclosure is applied to the projector is shown, but this is not a limitation. The light source device according to the present disclosure may be used as a lighting apparatus, a headlight of an automobile, and other components.

### Summary of Present Disclosure

The present disclosure will be summarized below as appendices.

### Appendix 1

A light source device including
a light source unit including a light emitting element configured to emit light,
a light guide member onto which the light emitted from the light emitting element is incident and which is configured to emit light,
a support member configured to support the light guide member,
a pressing unit configured to press the light guide member against the support member,
a measurement unit configured to measure a characteristic value correlated with a temperature of the light guide member,
a controller configured to acquire the characteristic value measured by the measurement unit, and
a temperature adjustment unit configured to adjust the temperature of the light guide member, wherein
the controller controls the temperature adjustment unit based on the characteristic value.

According to the light source device having this configuration, it is possible to prevent the temperature of the wavelength conversion member from becoming too high in a state where the light source device is in operation. Accordingly, since an increase in the temperature quenching of the second light in the wavelength conversion member can be suppressed, a decrease in the wavelength conversion efficiency of the wavelength conversion member can be suppressed. Further, it is possible to prevent the color gamut of the second light emitted from the wavelength conversion member from decreasing. Therefore, it is possible to prevent the quality of the image projected by the projector from deteriorating.

### Appendix 2

The light source device according to Appendix 1, wherein
the characteristic value is a temperature of the light guide member, and
the temperature adjustment unit adjusts pressing force applied by the pressing unit for pressing the light guide member against the support member.

According to this configuration, since the contact area between a second surface of the wavelength conversion member and a support surface of the support member can be adjusted, an amount of heat transferred from the wavelength conversion member to the support member can be adjusted. Therefore, since the amount of the heat released from the wavelength conversion member to the outside of the light source device via the support member can be adjusted based on the temperature of the wavelength conversion member, the temperature of the wavelength conversion member can be prevented from becoming too high. Therefore, it is possible to prevent the wavelength conversion efficiency of the wavelength conversion member from deteriorating and to prevent the quality of the image projected by the projector from degrading.

### Appendix 3

The light source device according to Appendix 2, wherein
the controller causes the temperature adjustment unit to increase the pressing force when the temperature of the light guide member becomes higher than a predetermined temperature.

According to this configuration, when the temperature of the wavelength conversion member becomes higher than the predetermined temperature, the contact area between the second surface and the support surface can be increased. Therefore, the amount of heat released from the wavelength conversion member to the outside of the light source device via the support member can be increased, and thus the temperature of the wavelength conversion member can be prevented from becoming too high.

### Appendix 4

The light source device according to Appendix 1, further including
a blower unit configured to send air to at least one of the support member and the light guide member, wherein
the characteristic value is a temperature of the light guide member, and
the temperature adjustment unit is configured to adjust an air blowing amount of the air sent by the blower unit to at least one of the support member and the light guide member.

According to the configuration described above, the amount of the heat released from the support member to the outside of the light source device can be adjusted in the state in which the light source device is in operation. In this way, since the amount of the heat released from the wavelength conversion member to the outside of the light source device via the support member can be adjusted based on the temperature of the wavelength conversion member, the temperature of the wavelength conversion member can be prevented from becoming too high. Therefore, it is possible to prevent the wavelength conversion efficiency of the wavelength conversion member from deteriorating and to prevent the quality of the image projected by the projector from degrading.

### Appendix 5

The light source device according to Appendix 4, wherein
the controller causes the temperature adjustment unit to increase the air blowing amount when the temperature of the light guide member becomes higher than a predetermined temperature.

According to this configuration, when the temperature of the wavelength conversion member is higher than the predetermined temperature, the amount of the heat released from the wavelength conversion member to the outside of the light source device via the support member can be increased by the temperature adjustment unit, and thus the temperature of the wavelength conversion member can be prevented from becoming too high.

### Appendix 6

The light source device according to Appendix 1, wherein
the characteristic value is chromaticity of the light emitted by the light guide member, and
the temperature adjustment unit adjusts pressing force applied by the pressing unit for pressing the light guide member against the support member.

According to this configuration, the amount of the heat released from the wavelength conversion member to the outside of the light source device via the support member can be adjusted based on the chromaticity of the second light, which is the characteristic value related to the temperature of the wavelength conversion member, and therefore, the temperature of the wavelength conversion member can be prevented from becoming too high. Therefore, it is possible to prevent the wavelength conversion efficiency of the wavelength conversion member from deteriorating and to prevent the quality of the image projected by the projector from degrading.

### Appendix 7

The light source device according to appendix 6, wherein
the controller causes the temperature adjustment unit to increase the pressing force when chromaticity of the light emitted by the light guide member is shifted toward a longer wavelength side from a predetermined chromaticity range.

According to this configuration, when the temperature of the wavelength conversion member increases, the amount of heat transferred from the wavelength conversion member to the support member can be increased by the temperature adjustment unit. Therefore, the amount of heat released from the wavelength conversion member to the outside of the light source device via the support member can be increased, and thus the temperature of the wavelength conversion member can be prevented from becoming too high.

### Appendix 8

The light source device according to Appendix 1, further including
a blower unit configured to send air to at least one of the support member and the light guide member, wherein
the characteristic value is chromaticity of the light emitted by the light guide member, and
the temperature adjustment unit is configured to adjust an air blowing amount of the air sent by the blower unit to at least one of the support member and the light guide member.

According to this configuration, in a state in which the light source device is in operation, the amount of the heat released from the wavelength conversion member to the outside of the light source device via the support member can be adjusted. Therefore, since the amount of the heat released from the wavelength conversion member to the outside of the light source device via the support member can be adjusted based on the chromaticity of the second light, the temperature of the wavelength conversion member can be prevented from becoming too high. Therefore, it is possible to prevent the wavelength conversion efficiency of the wavelength conversion member from deteriorating and to prevent the quality of the image projected by the projector from degrading.

### Appendix 9

The light source device according to appendix 8, wherein
the controller causes the temperature adjustment unit to increase the air blowing amount when the chromaticity of the light emitted by the light guide member is shifted toward a longer wavelength side from a predetermined chromaticity range.

According to this configuration, when the temperature of the wavelength conversion member becomes high, the amount of the heat released from the wavelength conversion member to the outside of the light source device via the support member can be increased by the temperature adjustment unit. Therefore, it is possible to prevent the temperature of the wavelength conversion member from becoming too high.

### Appendix 10

The light source device according to any one of Appendices 1 to 9, wherein
the light emitting element emits first light having a first wavelength band, and
the light guide member is a wavelength conversion member that includes a phosphor, converts the first light into second light having a second wavelength band different from the first wavelength band, and emits the second light.

According to this configuration, since the temperature of the wavelength conversion member can be prevented from becoming too high, it is possible to prevent the wavelength conversion efficiency of the wavelength conversion member from decreasing, and to prevent the quality of an image projected by the projector from deteriorating.

### Appendix 11

A projector including:
the light source device according to any one of Appendices 1 to 10;
a light modulation device configured to modulate light emitted from the light source device; and
a projection optical device configured to project the light modulated by the light modulation device.

According to the projector having this configuration, since the wavelength conversion efficiency in the wavelength conversion member can be increased, an amount of the second light emitted from the wavelength conversion member can be increased. Thus, an amount of the first light required to emit a predetermined amount of second light can be reduced. Therefore, since the amount of the first light emitted by the light emitting elements can be reduced, it is possible to reduce the power consumed by the projector.

## Claims

1. A light source device including
a light source unit including a light emitting element configured to emit light,
a light guide member onto which the light emitted from the light emitting element is incident and which is configured to emit light,
a support member configured to support the light guide member,
a pressing unit configured to press the light guide member against the support member,
a measurement unit configured to measure a characteristic value correlated with a temperature of the light guide member,
a controller configured to acquire the characteristic value measured by the measurement unit, and
a temperature adjustment unit configured to adjust the temperature of the light guide member, wherein
the controller controls the temperature adjustment unit based on the characteristic value.

2. The light source device according to claim 1, wherein
the characteristic value is a temperature of the light guide member, and
the temperature adjustment unit adjusts pressing force applied by the pressing unit for pressing the light guide member against the support member.

3. The light source device according to claim 2, wherein
the controller causes the temperature adjustment unit to increase the pressing force when the temperature of the light guide member becomes higher than a predetermined temperature.

4. The light source device according to claim 1, further comprising:
a blower unit configured to send air to at least one of the support member and the light guide member, wherein
the characteristic value is a temperature of the light guide member, and
the temperature adjustment unit is configured to adjust an air blowing amount of the air sent by the blower unit to at least one of the support member and the light guide member.

5. The light source device according to claim 4, wherein
the controller causes the temperature adjustment unit to increase the air blowing amount when the temperature of the light guide member becomes higher than a predetermined temperature.

6. The light source device according to claim 1, wherein
the characteristic value is chromaticity of the light emitted by the light guide member, and
the temperature adjustment unit adjusts pressing force applied by the pressing unit for pressing the light guide member against the support member.

7. The light source device according to claim 6, wherein
the controller causes the temperature adjustment unit to increase the pressing force when chromaticity of the light emitted by the light guide member is shifted toward a longer wavelength side from a predetermined chromaticity range.

8. The light source device according to claim 1, further comprising:
a blower unit configured to send air to at least one of the support member and the light guide member, wherein
the characteristic value is chromaticity of the light emitted by the light guide member, and
the temperature adjustment unit is configured to adjust an air blowing amount of the air sent by the blower unit to at least one of the support member and the light guide member.

9. The light source device according to claim 8, wherein
the controller causes the temperature adjustment unit to increase the air blowing amount when chromaticity of the light emitted by the light guide member is shifted toward a longer wavelength side from a predetermined chromaticity range.

10. The light source device according to claim 1, wherein
the light emitting element emits first light having a first wavelength band, and
the light guide member is a wavelength conversion member that contains a phosphor, and is configured to convert the first light emitted from the light emitting element into second light having a second wavelength band different from the first wavelength band and emit the second light.

11. A projector comprising:
the light source device according to claim 1;
a light modulation device configured to modulate light emitted from the light source device; and
a projection optical device configured to project the light modulated by the light modulation device.
